(19) Europäisches Patentamt
European Patent Office
Office européen des brevets

(11) **EP 3 980 968 B1**

(12) **EUROPÄISCHE PATENTSCHRIFT**

(45) Veröffentlichungstag und Bekanntmachung des Hinweises auf die Patenterteilung:
**12.07.2023  Patentblatt 2023/28**

(21) Anmeldenummer: **20731789.2**

(22) Anmeldetag: **28.05.2020**

(51) Internationale Patentklassifikation (IPC):
**G06T 7/246** *(2017.01)*    **G06T 7/579** *(2017.01)*

(52) Gemeinsame Patentklassifikation (CPC):
**G06T 7/579; G06T 7/246;** G06T 2207/30241

(86) Internationale Anmeldenummer:
**PCT/DE2020/200040**

(87) Internationale Veröffentlichungsnummer:
**WO 2020/244717 (10.12.2020 Gazette 2020/50)**

(54) **DETEKTION, 3D-REKONSTRUKTION UND NACHVERFOLGUNG VON MEHREREN RELATIV ZUEINANDER BEWEGTEN STARREN OBJEKTEN**

DETECTION, 3D RECONSTRUCTION AND TRACKING OF MULTIPLE RIGID OBJECTS MOVING IN RELATION TO ONE ANOTHER

DÉTECTION, RECONSTRUCTION 3D ET SUIVI DE PLUSIEURS OBJETS INDÉFORMABLES MOBILES LES UNS PAR RAPPORT AUX AUTRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.06.2019  DE 102019208216**

(43) Veröffentlichungstag der Anmeldung:
**13.04.2022  Patentblatt 2022/15**

(73) Patentinhaber: **Continental Autonomous Mobility Germany GmbH**
**85057 Ingolstadt (DE)**

(72) Erfinder: **ROTH, Axel**
**90411 Nürnberg (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
EP-A1- 3 474 230        DE-A1-102006 013 318
US-A1- 2013 265 387

• JAKOB ENGEL ET AL: "Direct Sparse Odometry", ARXIV.ORG, CORNELL UNIVERSITY LIBRARY, 201 OLIN LIBRARY CORNELL UNIVERSITY ITHACA, NY 14853, 9. Juli 2016 (2016-07-09), XP080713067, in der Anmeldung erwähnt
• RICHARD A. NEWCOMBE ET AL: "DTAM: Dense tracking and mapping in real-time", 2011 INTERNATIONAL CONFERENCE ON COMPUTER VISION, November 2011 (2011-11), Seiten 2320-2327, XP055405826, DOI: 10.1109/ICCV.2011.6126513 ISBN: 978-1-4577-1100-8

**Beschreibung**

Die Erfindung betrifft ein Verfahren und eine Vorrichtung zur Detektion, 3D-Rekonstruktion und Nachverfolgung von mehreren relativ zueinander bewegten starren Objekten aus einer Folge von Bildern mindestens einer Kamera und kann insbesondere im Rahmen eines kamerabasierten Umfelderfassungssystems zum assistierten oder automatisierten Fahren eingesetzt werden.

Folgende Verfahren zur Detektion, 3D-Rekonstruktion und Nachverfolgung von Objekten aus Bilddaten einer (einzelnen) Kamera sind bekannt:

Structure From Motion (SFM):

Verbreitete Ansätze zur Extraktion von 3D-Struktur aus Video-Daten nutzen indirekte Verfahren: Als Vorverarbeitungsschritt werden Bildkorrespondenzen mehrerer Kamerabilder identifiziert. Erst in nachfolgenden Schritten werden Epipolar-Geometrie, 3D-Struktur sowie Bestimmung der Relativ-Bewegung der Kamera ermittelt. Der Begriff indirektes Verfahren beschreibt, dass zweistufig zunächst der optische Fluss und danach die 3D-Struktur aus dem Fluss (SFM) gerechnet wird

Zur Bestimmung einer stationären Umgebung sind beispielsweise die nachfolgend genannten Ansätze bekannt.

Newcombe et al. zeigen in DTAM: Dense tracking and mapping in real time, 2011 International conference on computer vision, November 2011, p. 2920-2927, 10.1109/ICCV.2011.6126513 ein System für das Tracken und die Rekonstruktion von Kameradaten in Echtzeit, das nicht auf eine Extraktion von Merkmalen zurückgreift, sondern auf ein dichtes, "jedes Pixel" (berücksichtigendes) Verfahren. Eine detaillierte texturierte Tiefenkarte wird für ausgewählte Key-Frames geschätzt basierend auf Kamerabildern einer einzelnen handgehaltenen RGB-Kamera, die über eine statische Umgebung fliegt. Dadurch wir ein Oberflächen-Patchwork mit Millionen von Eckpunkten produziert. Hunderte von Bildern eines Videostreams werden verwendet, um die Qualität eines einfachen photometrischen Datenterms zu verbessern und ein globales räumliches regularisiertes Energiefunktional zu minimieren in einem neuartigen nicht-konvexen Optimisierungsrahmen.

DE 102006013318 A1 zeigt ein Verfahren zur 3D-Rekonstruktion einer statischen Szene aus 2D-Bilddaten, bei welchem mittels eines Bildsensors 2D-Bilddaten der Szene erfasst werden. Auf Basis der Methode des Depth from Defocus (DFD) wird eine Intensitätsverteilung, in die eine punktförmige Lichtquelle durch ein Objektiv und einen Bildsensor transformiert wird, aus mehreren unterschiedlich fokussierten pixelsynchronen Bildern der Szene geschätzt wird.

US 2013265387 A1 zeigt eine Rekonstruktionstechnik zum Auswählen und Rekonstruieren von optimierten Keyframes, die eine bessere Rekonstruktion von Bewegung und intrinsischen Parametern einer Kamera in Structure-from-motion (SFM) Verfahren bietet.

EP 3474230 A1 zeigt ein prozessorimplementiertes Verfahren, bei dem aufeinanderfolgende Bilder in Echtzeit von mehreren Ansichten bezogen werden, die von einer monokularen Kamera erfasst werden. Die Kamera befindet sich in einer SLAM- (Simultaneous Localization and Mapping) Umgebung durchläuft mehrere unbekannte Posen. Puntkorrespondenzen werden gebildet und Schlüsselbilder identifiziert, um eine validierte 3D-Struktur zu erhalten und die Trajektorie der Kamerabewegung zu schätzen.

Bundle-Adjustment:

Bundle-Adjustment (Bündelausgleich) wird verwendet für die Optimierung der Struktur- und Bewegungs-Parameter unter Zuhilfenahme mehrerer Bilder. Es wird ein geometrischer Fehler der Punkt- oder Linien-Korrespondenzen minimiert, etwa der Rückprojektionsfehler.

Photometrisches Bundle-Adjustment:

Photometrisches Bundle-Adjustment (Photometrischer Bündelausgleich) optimiert Struktur und Bewegung auf Basis eines probabilistischen photometrischen Fehler-Modells unter Zuhilfenahme von Bild-Intensitäten und -Gradienten: Alismail et al., Photometric Bundle Adjustment for Vision-Based SLAM, arXiv: 1608.02026v1 [cs.CV], 5. August 2016.

Photometrisches Bundle-Adjustment wird auf Ein-Objekt-Probleme angewandt (z.B. Bewegte Kamera + starre, unbewegte Umgebung), dies entspricht dem Problem der visuellen Odometrie (VO) oder Self Localization and Mapping (SLAM).

Direct Sparse Odometry (DSO) von Engel et al., arXiv:1607.02565v2 [cs.CV], 7. Oktober 2016 ist ein Verfahren, bei dem ein direktes probabilistisches Modell (Minimierung eines photometrischen Fehlers) kombiniert wird mit einer konsistenten, gemeinsamen Optimierung aller Modellparameter, inklusive Struktur-Geometrie als inverse Tiefe von Punkten in einem Referenzbild, Kamera-Trajektorie, wie auch eine affine Sensor-Kennlinie pro Bild, Brennweite und Hauptpunkt. Tracking mittels direktem 3D Image Alignment und photometrischem Bündelausgleich wird verwendet zur Realisierung einer visuellen Odometrie, wobei eine statische Szene angenommen wird. Zur einmaligen Initialisierung wird ein Grob zu Fein Bündelausgleich verwendet, basierend auf zwei Kamera-Bildern. DSO nutzt keine Keypoint-Korrespondenzen und nutzt entweder eine einzelne Kamera oder ein Stereo-Kamerasystem.

SFM mit mehreren Objekten:

Bekannte Verfahren zur 3D Rekonstruktion mehrerer Objekte sind zum Beispiel Keypoint-basierte Verfahren, wobei ein spärliches Fluss-Feld vorab berechnet wird, wie auch Verfahren, welche auf einem vorab berechneten dichten optischen Fluss-Feld basieren.

Ranftl et al. zeigen in Dense Monocular Depth Estimation in Complex Dynamic Scenes, DOI: 10.1 109/CVPR.2016.440 die Rekonstruktion sich bewegender Objekte zusammen mit ihrer Umgebung. Hierzu wird eine Bewegungs-Segmentierung (Motion Segmentation) mit einem Pro-Pixel Assignment zu unterschiedlichen Bewegungsmodellen durchgeführt, basierend auf einem vorab berechneten dichten optischen Fluss.

Es ist eine Aufgabe der Erfindung, eine verbesserte Objekt-Detektion, 3D-Rekonstruktion und Nachverfolgung für mehrere relativ zueinander bewegte Objekte anhand von Bildern einer Kamera oder anhand von Bildern mehrerer starr verbundener Kameras bereitzustellen.

Ein Ausgangspunkt sind folgende Überlegungen:

Indirekte Verfahren sind in gewissen Bereichen und Szenarien dem direkten, photometrischen Ansatz unterlegen, was Genauigkeit und Robustheit betrifft. Eine verringerte Genauigkeit der Vermessung führt bei Multi-Objekt-SFM-Ansätzen zu erhöhten Bereichen mit Mehrdeutigkeiten, welche wiederum zu falschem Objekt-Clustering führt. Etwa können nur leicht unterschiedlich bewegte Objekte nicht als zwei Objekte erkannt werden. Letztendlich ist die Qualität des Objekt-Clusterings / die Erkennung von bewegten Objekten limitiert durch die mit dem indirekten Ansatz einhergehenden Unsicherheiten in der Fehlerverteilung des vorab bestimmten optischen Flusses, bei spärlichem optischen Fluss ebenfalls durch die niedrige Dichte der Keypoint-Menge. Dies führt zu:

1. Einem eingeschränkten minimalen Raumwinkel pro Bewegungsmodell (-> hohe minimale Objektgröße / kleine maximale Objektentfernung),
2. Erhöhte minimale Bewegungsrichtungs-Abweichung, welche durch das Verfahren detektiert werden kann, und
3. Eingeschränkter Anwendbarkeit in Keypoint-armen Situationen.

Zunächst werden im Folgenden Aspekte der Erfindung und ihrer Ausführungsvarianten beschrieben:

**1. Detektion und Tracking mehrerer starrer Objekte mittels direktem 3D Image Alignment und photometrischem Multi-Objekt-Bündelausgleich als Online-Verfahren auf Basis einer Selektion von Key-Zyklen und Selektion von Bild-Punkten (sparse)**

Die Erfindung erweitert die Verfahren, wie sie insbesondere für Direct Sparse Odometry (DSO) verwendet werden, um Methoden zum Objekt-Clustering, zur Identifizierung aller verschiedenartig bewegte starren Objekte in Kamera-Videos (die gesamte starre stationäre Umgebung kann hierbei als ein Objekt bezeichnet werden), welche in angepasster Form kombiniert werden mit einem erweiterten photometrischem Bündelausgleich. Das Ergebnis beinhaltet sowohl die Bestimmung der Trajektorie und Struktur von eigenbewegten Objekten, wie auch die Bewegung des Kamerasystems relativ zur unbewegten Umgebung, sowie die Struktur der unbewegten Umgebung.

Online-Verfahren:

Obwohl eine gemeinsame Optimierung aller Parameter auf Basis von Bilddaten mehrerer Zeitpunkte erfolgt, ist das Verfahren zur gleichzeitigen Anwendung während der Datenerfassung geeignet (im Gegensatz zur Anwendung von Bündelausgleich als Batch-Verfahren nach der Datenerfassung). Das Verfahren eignet sich auch zur Erfassung von nur temporär sichtbaren Objekten.

Sparse, ohne Regularisierung:

Es werden zur Reduktion des Rechenaufwandes für den photometrischen Bündelausgleich nur die Bildpunkte selektiert, welche vermutlich einen relevanten Beitrag bzw. einen relevanten Constraint zur Lösung der Trajektorien-Schätzungen aller Objekte leisten. Dies sind in der Regel um Größenordnungen weniger Punkte als es Pixel in den Eingangsbildern gibt. Es werden keine Regularisierungs-Terme zur Regularisierung der Tiefenschätzungen benötigt, und die damit einhergehenden potentiellen systematischen Fehler vermieden.

Im Kern der Methode erfolgt eine gemeinsame Optimierung (Maximum-a-posteriori-Schätzung) folgender Parameter:

- Tiefen mehrerer selektierter Punkte mehrerer selektierter Bilder, für mehrere Objekte, repräsentiert durch die inverse Tiefe (1 Parameter pro Punkt und Objekt)
- Optional: Normalen-Vektor jedes selektierten Punktes für mehrere Objekte (2 Parameter pro Punkt und Objekt)
- Anzahl der Bewegungsmodelle
- Trajektorie jedes Bewegungsmodells (Pose bzw. 3D-Position und 3D-Rotation zu jedem Key-Zyklus)
- Zuordnung von selektierten Punkten zu Bewegungsmodellen (1 Parameter pro Punkt und Bewegungsmodell, mittels Soft-Assignment oder Hard-Assignment)
- Schätzung von (z.B. affinen) Sensor-Kennlinie pro Bild (wird im Folgenden aus Gründen der Lesbarkeit nicht notiert; s. beispielsweise Engel et al. DSO Kapitel 2.1 Calibration) und
- Schätzung von Brennweite und Hauptpunkt (wird im Folgenden aus Gründen der Lesbarkeit nicht notiert; s. beispielsweise Engel et al. DSO Kapitel 2.1 Calibration).

Minimiert wird das Fehlerfunktional

$$E := E_{photo} + E_{comp} + E_{geo}$$

mit dem photometrischen Fehler der Menge an selektierten unverdeckten Bildpunkten $E_{photo}$, einem a-priori Term $E_{comp}$, mit Annahmen zur Komposition der Szene aus mehreren Bewegungsmodellen, sowie $E_{geo}$ mit a-priori-Annahmen zur Geometrie einzelner Objekte.

Der photometrische Fehler-Term ist definiert über

$$E_{photo} := \sum_{m \in M} g^m \sum_{i \in F} \sum_{p \in P_i} \rho_p^m \sum_{j \in obs(p)} E_{pj}^m$$

Mit dem photometrischen Fehler $E_{pj}^m$ einer Beobachtung in Bild $j$ eines Punktes p bzgl. eines Bewegungsmodells m

$$E_{pj}^m := \sum_{n \in N_p} w_n \left\| I_j \left( \pi_j^m(n, id_p^m) \right) - I_i(n) \right\|_\gamma$$

Hierbei ist M die Menge der Bewegungsmodelle, $g^m$ eine optionale Wichtung auf Basis eines A-Priori-Modells der geometrischen Fehler des Kameramodells, welche sich in Abhängigkeit der Objektgröße unterschiedlich stark auswirken, F die Menge aller Bilder im dynamischen Bündelausgleichs-Fenster, $P_i$ die Menge aller aktiven Punkte des Bildes $i$, obs(p) die Menge aller anderen Bilder mit Beobachtungen des Punktes p. $w_n$ ist eine Wichtung der Pattern-Punkte $n$ (Nachbarschaft $N_p$ um $p$), $I_i$ und $I_j$ bezeichnen Grauwerte zweier Bilder, $\pi_j^m$ die Projektion eines Punktes $n$ in ein Kamerabild $j$ mittels des Bewegungsmodells m und zugeordneten inversen Tiefen $id_p^m$. $\rho_p^m$ bezeichnet die Wahrscheinlichkeit der Zugehörigkeit eines Punktes zum Bewegungsmodell m, wobei gilt:

$$\sum_{m \in M} \rho_p^m = 1, \rho_p^m \geq 0$$

$\|.\|_\gamma$ bezeichnet die Huber-Norm.

Da die Anzahl an Bewegungsmodellen im Allgemeinen nicht beobachtbar ist, soll die minimale Anzahl bevorzugt werden. Hierzu wird ein a-priori Term $E_{comp}$ definiert, ggf. abhängig von Parametern, mit Annahmen über die Wahrscheinlichkeitsverteilung der Anzahl der Objekte. Etwa kann $E_{comp}$ eine streng monoton steigende Funktion der Anzahl der Objekte sein, oder angelehnt werden an das Kriterium der Minimum Description Length (minimalen Beschreibungslänge).

Der a-priori Term $E_{geo}$ kann Geometrie-Annahmen repräsentieren, etwa eine Kompaktheits-Forderung von Objekten, um Mehrdeutigkeiten im Clustering entgegenzuwirken. Es wird z. B. eine Wahrscheinlichkeit modelliert für voneinander abweichende Objektzugehörigkeit (also für Objektgrenzen) bei Betrachtung eines jeden Paares von benachbarten Punkten. Hierdurch werden Objekt-Segmentierungen mit möglichst wenigen Objektgrenzen bevorzugt. Der Term kann entfallen etwa bei Anwendungsszenarien mit wenig Mehrdeutigkeiten.

Zur Feststellung der Beobachtbarkeit bzw. der Menge *obs*(*p*) werden zunächst Projektionen außerhalb der Bildränder oder mit negativer Tiefe (in der Ziel-Kamera) entfernt. Zur Feststellung von Verdeckungen durch andere Strukturen wird z.B. der photometrische Fehler jeder Projektion bewertet, oder die Verdeckungsanalyse verwendet (siehe "Verdeckungen").

### Optimierung

Zur Optimierung des Fehlerfunktionals wird alternierend bei fixer Objektzuordnung Levenberg-Marquardt für Trajektorien- und Strukturparameter angewandt (dies entspricht dem photometrischen Bündelausgleich pro Objekt), und anschließend bei fixer Geometrie und fixer Anzahl an Objekten etwa die Interior-Point-Methode, (bei Anwendung von Soft-Assignment), oder etwa Graph-Cut zur Optimierung der Zugehörigkeiten. Hierfür werden Tiefen-Parameter eines jeden selektierten Punktes für fremde Objekte benötigt, diese können vorab optimiert werden, sofern sie nicht während des Bündelausgleichs optimiert wurden.

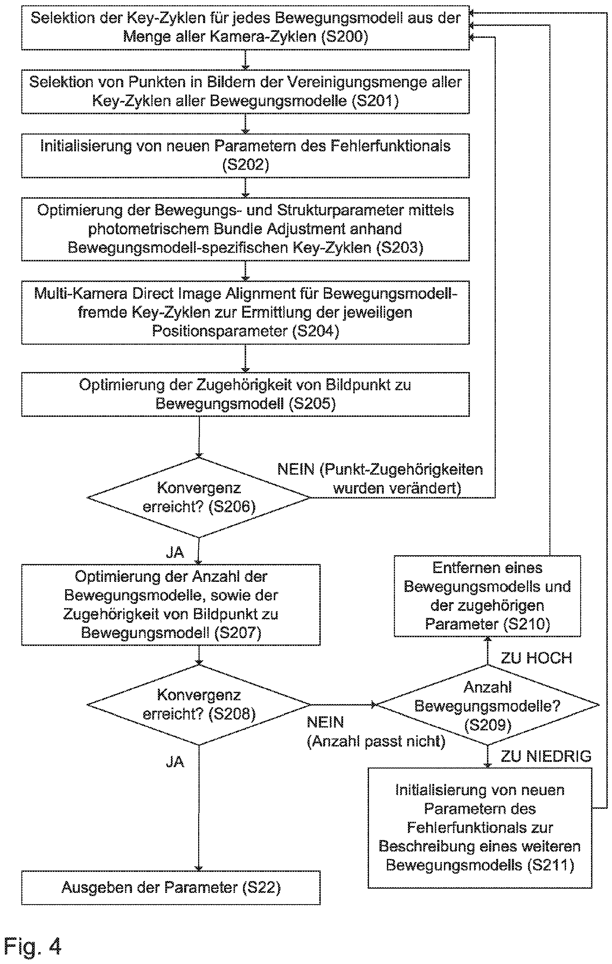

In einer übergeordneten Optimierungs-Schleife wird alternierend zunächst wie beschrieben wiederholend Struktur, Trajektorie und Objektzuordnung optimiert, bis hierbei eine Konvergenz erreicht ist, und dann zur Optimierung der Anzahl der Bewegungsmodelle Hypothesen für neue Konfigurationen (Objekte und deren Punktzuordnung) derart gebildet, dass eine Verringerung des Gesamtfehlers zu erwarten ist. Neue Konfigurations-Hypothesen werden nach dem Verfahren zur Initialisierung evaluiert. [siehe auch Fig.4]

### Key-Zyklus-Management

Die optimale Selektion von Bildern aus dem Bilddatenstrom zur Nutzung im Bündelausgleich kann Objekt-spezifisch sein. Eine beispielhafte Strategie wäre: Ein Objekt ist fast ruhend →sehr niedrige Key-Zyklus-Frequenz wählen, anderes Objekt bewegt sich schnell →hohe Key-Zyklus-Frequenz wählen.

### Mögliches Problem:

Clustering-Parameter können nicht optimiert werden, da nicht für alle Objekte für die Vereinigungsmenge aller Key-Zyklen der photometrische Fehlerterm ermittelt werden kann, weil die Objekt-Pose im Bündelausgleich nur an den Objekt-spezifischen Key-Zyklen ermittelt wird.

### Mögliche Lösung:

Für alle Objekte werden für alle fremden (jeweils nicht Objekt-spezifischen) Key-Zyklen die Posen mittels Direct Image Alignment ermittelt. Dabei wird nur die Pose zu diesen Zeitpunkten ermittelt, ohne eine Optimierung der Struktur. Nun kann für jeden Punkt und jedes Bewegungsmodell zu jedem eigenen und fremden Key-Zyklus der photometrische Fehler-Term ermittelt werden, welcher für die Optimierung der Punkt-Bewegungsmodell-Zuordnung benötigt wird.

Wurde in einem Zyklus für kein Objekt eine Änderung der Selektion der Key-Zyklen vorgenommen, ergeben sich keine neuen Daten für die nachfolgende Optimierung. In diesem Fall reduziert sich der Zyklus auf reines Tracking bzw. Schätzung der Pose der Objekte via Direct Image Alignment.

### Hypothesenbildung (1): Detektion eines weiteren Bewegungsmodells

Die Detektion eines weiteren Bewegungsmodells bzw. eines weiteren anders bewegten Objekts geschieht durch folgendes Verfahren: Hypothesen für Objekt-Konfigurationen (Eine Hypothese H ist eine konkrete Menge bzw. Annahme aller Modellparameter-Werte) können auf Basis einer Analyse der (photometrischen) Fehler von zusätzlichen, dichter gestreuten Punkten mit optimierten Tiefen gebildet werden (diese zusätzlichen Punkte sind nicht beteiligt am photometrischen Bündelausgleich). Es werden örtliche und zeitliche Häufungen von hohen Fehlern einer ausoptimierten Hypothese $H_{old}$ (etwa die Konfiguration der letzten Iteration) ermittelt, und ggf. eine neue Hypothese $H_{new}$ definiert, wobei die neue Hypothese ein weiteres Objekt beinhaltet im Bereich der ermittelten Fehler-Häufung. Das Kriterium für das Aufsetzen und Evaluieren einer neuen Hypothese könnte wie folgt definiert sein:

$$E_{comp}(H_{new}) + E_{geo}(H_{new}) + C_{photo}(H_{new}) < E \ (H_{old})$$

wobei $C_{photo}(H_{new})$ eine heuristische Abschätzung des erwarteten photometrischen Fehlers der neuen Hypothese ist, etwa basierend auf A-Priori-Annahmen und der ermittelten Fehler-Häufungen. Es wird zunächst nur eine heuristische Abschätzung $C_{photo}(H_{new})$ verwendet, da Struktur und Trajektorie des neuen Objektes noch nicht genau bekannt sind. Eine Evaluation der Hypothese (und damit die Ermittlung von $E_{photo}(H_{new})$ und $E \ (H_{new})$) geschieht während den Optimierungen der Initialisierung. Die Hypothese wird während der grob-zu-fein-Initialisierung verworfen, wenn der Gesamtfehler größer wird, verglichen mit dem Gesamtfehler einer anderen ausoptimierten Hypothese (etwa die Konfiguration der letzten Iteration). Eine letzte, nicht verworfene Hypothese wird zur neuen Konfiguration für den aktuellen Zyklus.

Eine Modellierung von Verdeckungen, die nachfolgend beschrieben wird, ist wichtig bei der Hypothesenbildung, um Falsch-Positiv-Detektionen durch Verdeckungen zu vermeiden.

Hypothesenbildung (2): Eliminierung eines Bewegungsmodells

Sofern festgestellt wird, dass zu viele Objekte angenommen werden, also dass die Existenz von gewissen Bewegungsmodellen den Gesamtfehler erhöht, werden diese Bewegungsmodelle und die zugehörigen Parameter aus dem Fehlerfunktional eliminiert. Zur Feststellung, ob die Existenz eines Bewegungsmodells den Gesamtfehler erhöht, wird folgendes Vorgehen angewendet:
Für jedes Objekt wird regelmäßig auf Basis der bisherigen Konfigurationshypothese $H_{old}$ eine neue Konfigurations-Hypothese $H_{new}$ gebildet, welche dieses Objekt nicht mehr beinhaltet. $H_{new}$ wird optimiert und der Gesamtfehler dabei bestimmt. Generell ist für Hypothesen mit einem entfernten Objekt i. d. R. zu erwarten, dass $E_{comp}(H_{new}) < E_{comp}(H_{old})$ und $E_{photo}(H_{new}) > E_{photo}(H_{old})$ sind. Es wird nun geprüft, ob $E \ (H_{new}) < E \ (H_{old})$ ist, also ob der Gesamtfehler der neuen Hypothese kleiner ist als der der ursprünglichen Hypothese. Falls ja, wird die neue Hypothese übernommen, also das Bewegungsmodell entfernt.

Statt der vollständigen Optimierung (also gemeinsame Optimierung aller Modellparameter) einer neuen Hypothese kann folgende Vereinfachung erfolgen, welche eine obere Schranke für den Gesamtfehler ermittelt: Es werden nur die Punktzuordnungen der Punkte optimiert, welche dem eliminierten Objekt zugeordnet waren, und alle Struktur- und Trajektorienparameter werden beibehalten. Dieses Vorgehen ist dann sehr schnell.

Initialisierung neuer Punkt-Tiefen bei bekannten Bewegungsmodellen

Die Optimierung einer neuen Punkt-Tiefe kann durch eine eindimensionale Brute-Force-Suche über diskretisierte Tiefenwerte erfolgen mit anschließender Levenberg-Marquard Optimierung. Die Diskretisierungs-Abstände werden dem erwarteten Konvergenzradius der Optimierung angepasst (etwa im 1 Pixel Abstand der Projektionen). Alternativ kann zur Reduktion der Laufzeit, eine Kombination aus grob-zu-fein-Ansatz und Brute-Force-Suche angewendet werden: Für ein Bild kann eine Bildpyramide erzeugt werden, bei der z.B. Pyramidenstufe 0 dem Originalbild (mit voller Pixelauflösung), Pyramidenstufe 1 dem Bild mit halber Pixelauflösung (entlang jeder Bildachse), Pyramidenstufe 2 dem Bild mit einem Viertel der Pixelauflösung und so weiter entsprechen.

Beginnend mit einer groben Pyramidenstufe (reduzierter Pixelauflösung) werden nach Brute-Force-Suche über (der Pyramidenauflösung angepassten) diskretisierte Tiefenwerte bei hohen Fehlerwerten Punkt-Tiefen-Bereiche ausgeschlossen. Nach Wechsel auf eine feinere Pyramidenstufe werden nur die noch nicht ausgeschlossenen Punkt-Tiefen-Bereiche via Brute-Force-Suche erneut evaluiert. Später, etwa nach Abschluss der feinsten Pyramidenstufe, wird mittels Levenberg-Marquard die beste Tiefen-Hypothese verfeinert. Andere verbleibende Hypothesen können vermerkt werden zur Indikation von Mehrdeutigkeiten der jeweiligen Punkt-Tiefe.

Während der Initialisierung müssen Verdeckungen und sonstige nicht modellierte Einflüsse berücksichtigt werden, etwa durch das Verfahren in Abschnitt "Verdeckungen", durch Entfernung von Ausreißer-Projektionen, und/oder Gewichtung von Projektionen, etwa anhand einer a-priori-Annahme der Wahrscheinlichkeit der Verdeckung in Abhängigkeit des zeitlichen Abstandes.

Initialisierung neuer Bewegungsmodelle und deren Punkt-Tiefen

Struktur- und Trajektorien-Parameter von neuen Bewegungsmodellen sind zunächst unbekannt und müssen innerhalb des Konvergenzradius des nicht-konvexen Optimierungs-Problems initialisiert werden.

Das Erzeugen von Korrespondenzen in einer Bildfolge (spärlicher oder dichter optischer Fluss) ist rechenintensiv, und kann fehleranfällig sein. Die Erfindung löst auch das Problem der Initialisierung von lokalen Bewegungsmodellen ohne die Notwendigkeit der expliziten Berechnung des optischen Flusses zwischen den Key-Zyklen.

Mögliche Probleme:

1. Der Konvergenzbereich des photometrischen Bündelausgleichs kann grob abgeschätzt werden mit dem Bereich im Parameter-Raum, in dem alle Projektionen in alle Bilder nicht weiter als ungefähr 1 Pixel von der korrekten Projektion entfernt sind. Alle Parameter der Trajektorie (mehrere Bilder!) sowie Punkt-Tiefen müssen also ausreichend gut initialisiert sein, sodass möglichst viele Projektionen von Punkten bereits maximal 1 Pixel Entfernung zur korrekten Lösung haben, bevor eine Levenberg-Marquardt-Optimierung vorgenommen werden kann.
2. Es stehen keine Korrespondenzen bzw. optischer Fluss zur Verfügung für eine Generierung einer initialen Bewegungsschätzung

Mögliche Lösung: Statt des globalen 2-Frame Grob-Zu-Fein-Ansatzes des DSO wird ein neuer lokaler "Multi Frame Nah-Zu-Fern / Grob-zu-Fein Ansatz" verwendet:
Lokale Struktur Parameter aller Key-Zyklen werden mit 1, Trajektorien-Parameter mit 0 initialisiert. (Alternativ können für die Initialwerte a-priori-Annahmen, sowie eine übergeordnete Brute-Force-Suche einfließen, wie weiter unten aufgeführt).

Zunächst werden

a) nur Punkte auf einer gröber gewählten Pyramidenstufe, sowie
b) nur deren Observationen evaluiert, welche zeitlich/örtlich nahe zum jeweiligen Besitzer-Bild sind (z.B. werden für einen Punkt des fünften Bildes zunächst nur Observationen evaluiert im vierten und sechsten Bild).

Während der Bündelausgleichs-Optimierung wird nun sukzessive die Auflösung erhöht, wie auch zunehmend fernere Observationen evaluiert. Spätestens in der letzten Iteration wird die maximal aufgelöste Pyramidenstufe, sowie alle Observationen verwendet.
a) und b) sorgen in Kombination für eine deutliche Erweiterung des Konvergenzbereiches im Parameterraum: Es werden so nur Terme evaluiert, für die der aktuelle Zustand (i. d. R.) in dem Bereich ist, in dem das Minimum der Linearisierung eine gute Approximation des tatsächlichen Minimums ist.

Während der lokalen Multi Frame Nah-Zu-Fern-/ Grob-zu-Fein-Initialisierung werden abwechselnd Struktur + Trajektorie, und Punktzugehörigkeiten optimiert. Mit zunehmender Auflösung wird das Objekt-Clustering genauer.

Da auch mittels des beschriebenen Ansatzes nicht immer die Konvergenz zum globalen Minimum garantiert ist, kann zusätzlich eine Grob-zu-Fein-Brute-Force-Suche angewendet werden, ähnlich des weiter oben beschriebenen Ansatzes zur Initialisierung von Punkt-Tiefen: Verschiedene Initialwerthypothesen werden beginnend mit einer groben Pyramidenstufe optimiert und kontinuierlich selektiert durch Überprüfung des Fehlers, sodass idealerweise nur die korrekte Konfigurations-Hypothese bis zur feinsten Pyramidenstufe ausoptimiert wird.

Die für die Grob-zu-Fein-Brute-Force-Suche notwendigen diskretisierten Startwerte können von einem A-Priori-Objektmodell abgeleitet werden, was etwa Bereiche typischer Objekttrajektorien und Tiefen einer konvexen Form vorschlägt, wobei die Kamera-Eigenbewegung gegenüber dem starren Hintergrund "subtrahiert" werden kann. Initiale Punkt-Tiefen des neuen Bewegungsmodells können auch abgeleitet werden aus optimierten Tiefen des alten Objektclusterings mit weniger Bewegungsmodellen.

Vorteile:

Neben der Notwendigkeit, alle Parameter mehrerer Frames zu initialisieren, sind die Vorteile gegenüber dem 2-Frame Grob-Zu-Fein-Ansatzes des DSO die implizite Nutzung von Trilinear-Constraints (>= 3 Frames) schon in der ersten Iteration, welche erst dazu führen, dass Line-Feature-artige Punkte einen Constraint darstellen. So ist auch die Identifikation von falsch zugeordneten Punkten als "Modell-fremd" bereits in der ersten Iteration zuverlässiger. Zusätzlich wurde Grob-zu-Fein-Brute-Force-Suche ergänzt, um das Risiko der Konvergenz zu lokalen Minima zu reduzieren (Das photometrische Bündelausgleichs-Problem ist stark nicht-konvex, beinhaltet also lokale Minima).

Verdeckungen

Mögliches Problem:

Verdeckungen sind im Bündelausgleichs-Fehler nicht modelliert und führen zu potentiell fehlerhaftem Objekt-Clustering bzw. zu fehlerhaften Hypothesen.

Die Modellierung von Verdeckungen ist aufgrund des "sparse" Ansatzes schwierig.

Mögliche Lösung:

Die für die Hypothesenbildung genutzte sehr dichte Punktverteilung kann genutzt werden, um gegenseitige Verdeckung von Punkten geometrisch vorherzusagen. Ist eine Verdeckung von Observationen ermittelt, werden diese Observationen aus dem Fehlerfunktional gelöscht.

Im Multi-Objekt-Fall muss für die Modellierung von Verdeckungen zwischen Objekten eine ungefähre relative Skalierung bekannt sein, welche z.B. mit spezifischen Domain-Modell-Annahmen geschätzt werden kann, sofern keine Stereo-Information vorliegt. Die relative Skalierung unterschiedlicher Objekte kann auch mithilfe einer zusätzlichen Detektion von Verdeckungen bzw. Feststellung einer Tiefenordnung der Objekte ermittelt werden. Dies kann z.B. realisiert werden, indem bei vorhergesagter Kollision bzw. Überlappung zweier Punkte zweier Objekte anhand deren photometrischer Fehler festgestellt wird, welcher Punkt bzw. welches Objekt im Vordergrund ist.

Selektion von Punkten

Punkte zur Selektion für den (spärlichen) Bündelausgleich werden derart selektiert, dass auch für kleine Objekte möglichst alle im Bild vorhandenen Constraints genutzt werden. Etwa werden pro Objekt eine fixe Anzahl an Punkten selektiert. Dies kann dazu führen, dass für sehr kleine Objekte eine sehr dichte Punktselektion, und damit effektiv die Nutzung fast aller verfügbaren relevanten Bildinformation der Bildausschnitte erfolgt, welche das Objekt abbilden.

So ergibt sich bei Betrachtung des gesamten Raumwinkels eines Kamera-Bildes eine heterogene Punktdichte, jedoch für individuelle Objekte eine gleichmäßige Dichteverteilung.

## 2. Erweiterung des Verfahrens auf ein Multi-Kamera-System

Die Erfindung erweitert den Multi Objekt Ansatz aus 1. um Multi-Kamera-Systeme: Videos von (einer oder) mehreren synchronisierten Kameras, welche starr verbunden sind, mit potentiell verschiedenen intrinsischen Eigenschaften (z.B. Brennweite / Verzeichnung) und Erfassungsbereichen werden in einem gemeinsamen Optimierungsprozess verarbeitet.

Im Kontext von Multi-Kamera-Systemen umfasst der Begriff Key-Zyklus (engl. key cycle, "Schlüsselzyklus") die Menge der Bilder aller Kameras, welche zu einem Kamerazyklus bzw. Aufnahmezeitpunkt erfasst werden. Das Fehlerfunktional wird angepasst, so dass

a) Die unterschiedlichen Kameramodelle, wie auch die (vorab bekannten) relativ-Positionen der Kameras durch unterschiedliche Projektionsfunktionen $\pi_j^m$ modelliert werden

b) pro Zeitzyklus und Bewegungs-Modell Positions-Parameter (Rotation und Translation) bzgl. eines Kamerasystem-Bezugspunktes geschätzt werden (anstatt bzgl. eines Kamera-Zentrums), und

c) *F* die Menge aller Bilder aller Kameras der selektierten Key-Zyklen repräsentiert, sowie *obs*(*p*) die Menge aller Bilder mit Beobachtungen eines Punktes *p* in allen Kameras und Key-Zyklen (optional können redundante Beobachtungen entfernt werden, um Rechenzeit einzusparen). Punkte können in allen Bildern in *F* selektiert werden.

Diese Formulierung bzw. dieser Ansatz nutzt alle verfügbaren Constraints zwischen allen Bildern aller Kameras, und macht keine Annahmen zu Kamerasystem-Konfigurationen. Er ist somit anwendbar auf beliebige Base-Lines, Kamera-Ausrichtungen, beliebige überlappende oder nicht überlappende Erfassungsbereiche, wie auch stark heterogene intrinsischen Eigenschaften (etwa Tele-Optik und Fischaugen-Optik). Ein Anwendungsbeispiel wäre ein Kamerasystem mit sowohl Weitwinkel-Kameras in alle (Himmels-)Richtungen, als auch wenige Tele-Kameras (oder Stereo-Kameras) ausgerichtet in kritische Raumrichtungen.

Das Tracking mittels Direct Image Alignment wird erweitert zum Multi Kamera Direct Image Alignment. Es ergeben sich dieselben Änderungen wie im photometrischen Multi-Kamera-Bündelausgleich:

Es wird eine Trajektorien-Optimierung bzgl. eines Kamerasystem-Bezugspunktes durchgeführt (statt bzgl. des Kamera-Zentrums), während die Summe der photometrischen Fehler in allen Kameras minimiert wird. Hierbei werden ebenfalls alle verfügbaren Constraints verwendet, also auch photometrische Fehler von Inter-Kamera-Projektionen. Ebenfalls müssen hier die Projektionsfunktionen spezifisch an das jeweilige Kameramodell und Relativ-Position im Kamerasystem angepasst werden.

Initialisierung:

Da die Minimierung des neuen Fehlerfunktionals auch Teil der Initialisierung von Konfigurationshypothesen ist, werden auch in der Initialisierungsphase alle verfügbaren Constraints aller Kameras genutzt. Z.B. wird dadurch die Skalierung von Objekten im Überlappungsbereich automatisch bestimmt. Objekte, welche in einer Kamera initialisiert werden, und später in ein Sichtfeld einer zweiten Kamera gelangen, müssen ggf. neu initialisiert werden, wenn die geschätzte Skalierung stark vom korrekten Wert abweicht.

## 3. Visuelle Odometrie mit erhöhter Präzision und Skalierung

Sowohl die Segmentierung des starren Hintergrunds, als auch die Nutzung der Multi Kamera Optimierung erhöht die Präzision und Robustheit der Visuellen Odometrie vgl. mit DSO, insbesondere in schwierigen Szenarien mit bewegten Objekten in großen Teilen des Bildes, oder in Szenen mit wenig Strukturen in nur einer Kamera.

Bei Kamerasystemen mit statischen oder dynamischen Überlappungsbereichen kann aufgrund der Auswertung der Inter-Kamera-Beobachtungen von Punkten bei bekanntem Maßstab der Relativpositionen der Kameras die absolute Skalierung der Visuellen Odometrie ermittelt werden.

## 4. Autokalibrierung von intrinsischen photometrischen, intrinsischen geometrischen und extrinsischen Parametern

Die Vignettierung kann parametrisch approximiert bzw. modelliert werden. Gleiches gilt für ein Modell der Sensor-Kennlinie. Die sich ergebenden Parameter jeder Kamera können im oben beschriebenen direkten Multi Objekt Bündelausgleich optimiert werden. Aufgrund der hohen Genauigkeit der Struktur- und Trajektorien-Schätzungen, sowie aufgrund der Modellierung von eigenbewegten Objekten ist eine erhöhte Genauigkeit der Modell-Optimierung zu erwarten, etwa im Vergleich zur Kombination mit einer reinen Visuellen Odometrie.

Modellierung von Verzeichnung und Bestimmung von intrinsischen geometrischen Parametern: Die sich ergebenden Parameter jeder Kamera können im oben beschriebenen direkten Multi Objekt Bündelausgleich optimiert werden. Aufgrund der hohen Genauigkeit der Struktur- und Trajektorien-Schätzungen, sowie aufgrund der Modellierung von eigenbewegten Objekten ist eine erhöhte Genauigkeit der Modell-Optimierung zu erwarten, etwa im Vergleich zur Kombination mit einer reinen Visuellen Odometrie.

Schätzung von extrinsischen Parametern: Die Positionen der Kameras relativ zueinander können im oben beschriebenen direkten Multi Objekt

Bündelausgleich optimiert werden. Aufgrund der hohen Genauigkeit der Struktur- und Trajektorien-Schätzungen, sowie aufgrund der Modellierung von eigenbewegten Objekten ist eine erhöhte Genauigkeit der Modell-Optimierung zu erwarten, etwa im Vergleich zur Kombination mit einer reinen Visuellen Multi-Kamera-Odometrie.

Zu beachten ist hier: Soll eine metrische Rekonstruktion erfolgen, ist mindestens ein Abstand zweier Kameras als absolute metrische Referenz festzuhalten, um Drift der Skalierung zu vermeiden.

Initialwerte aller Parameter der Kamera-Kalibrierungen müssen vorab ermittelt und dem Verfahren bereitgestellt werden. Hierbei ist zu gewährleisten, dass durch ausreichende Genauigkeit der Initialwerte der Parametervektor innerhalb des Konvergenzbereiches des Fehlerfunktionals der gröbsten Pyramidenstufe liegt. Die Initialwerte können des Weiteren zusammen mit einer A-Priori-Verteilung einfließen in das Fehlerfunktional, um Anwendungs-abhängigen Mehrdeutigkeiten vorzubeugen. Des Weiteren können Constraints zu den Kalibrier-Parametern, welche beim Verwerfen/Austauschen eines Key-Zyklus gelöscht werden würden, in linearisierter Form beibehalten werden mittels des u.a. bei DSO verwendeten Verfahrens der Marginalisierung.

## 5. Fusion mit anderen Sensoren und Methoden

a. Eine Fusion mit anderen Methoden der Objekterkennung (z.B. Mustererkennung (Deep Neural Networks, ...)) verspricht hohes Potential, da die Fehlerverteilungen beider Ansätze weitestgehend unkorreliert sind. Ein exemplarischer Anwendungsfall besteht in einer Objekt-Detektion, 3D-Rekonstruktion und Tracking zur Fusion mit Mustererkennungs-basierenden Systemen in einem automatisierten Fahrzeug mit einer Stereo-Kamera sowie einem Surround-View Kamerasystem.

b. Eine Fusion mit einer Inertial-Sensorik und einer Odometrie im Fahrzeug verspricht hohes Potential zur Lösung der Eigenbewegungssschätzung (== 3D Rekonstruktion des "Objektes" statische Umgebung) in kritischen Szenarien, und kann die Bestimmung absoluter Skalierungen ermöglichen.

c. Eine Fusion mit weiteren Umfelderfassungssensoren, insbesondere Radar und/oder Lidar.

**6. Anwendungen**

Anwendung von 1. bis 5. zur Detektion und Tracking von bewegten Verkehrsteilnehmern, Rekonstruktion der starren unbewegten Fahrzeug-Umgebung, sowie der Schätzung der Eigenbewegung durch ein Fahrerassistenz-(ADAS)-System oder ein System für automatisiertes Fahren (AD, Automated Driving).

Anwendung von 1. bis 5. für die Umfelderfassung und unterstützend zur Selbstlokalisierung in autonomen Systemen wie Robotern oder Drohnen, unterstützend zur Selbstlokalisierung von VR-Brillen oder Smartphones, 3D-Rekonstruktion von bewegten Objekten in der Überwachung (Stationäre Kamera, etwa Verkehrsüberwachung).

Vorteile der Erfindung und ihrer Ausführungsvarianten

1. Das vorgeschlagene Verfahren benötigt keine lokale Korrespondenzsuche als Vorverarbeitungsschritt, welcher eine nicht triviale, fehleranfällige und Laufzeit-Intensive Aufgabe darstellt.

2. Das vorgeschlagene Verfahren ermöglicht gegenüber indirekten Methoden in kritischen Situationen eine teils deutlich erhöhte Genauigkeit aller Schätzungen. Eine Erhöhung der Bewegungsschätzungs-Genauigkeit führt im Multi Objekt Clustering zu einer Auflösung von Mehrdeutigkeiten, etwa die Trennung/Identifikation zweier Objekte, welche sich im Kamerabild fast gleich bewegen, bzw. deren Bewegungsrichtung fast dieselbe ist.

3. Das Lock-On-Verhalten von direkten, photometrischen Methoden begünstigt bei geichzeitigem Vorhandensein von mehreren Bewegungsmodellen eine Konvergenz der Lösung des Ein-Objekt-Problems zu dem dominanten Bewegungsmodell (im Gegensatz zur Konvergenz zu einer falschen "Kompromiss"-Lösung), das zweite Bewegungsmodell kann dann als solches identifiziert werden. Dieses Verhalten wirkt sich vorteilhaft bei der Unterscheidung von Bewegungsmodellen aus, und verbessert die Konvergenz des Multi-Objekt-Problem zu der korrekten Gesamtlösung. Diese Eigenschaft ist bei klassischen indirekten Methoden nicht vorhanden.

4. Durch die Identifikation von bewegten Objekten wird die Visuelle Odometrie verbessert: Bewegte Objekte sind in herkömmlichen Verfahren (z.B. DSO) Störfaktoren. Im neuen Ansatz werden bewegte Objekte automatisch identifiziert und aus der Eigenbewegungsschätzung anhand der stationären Umgebung eliminiert.

5. Das beschriebene Verfahren erlaubt das nahezu beliebig dichte Samplen von Pixeln aus Kontrast-behafteten Regionen, welche miteinbezogen werden. Zusammen mit der vergleichsweise hohen Schätz-Genauigkeit von Bewegung und Struktur erlaubt dies, dass Objekte mit vergleichsweise kleinem Raumwinkel und vergleichsweise niedriger Auflösung detektiert und insbesondere nachverfolgt (getrackt) werden können.
Diese Eigenschaft ist bei klassischen indirekten Methoden ebenfalls nicht gegeben.

6. Durch Verwendung der Multi-Kamera-Erweiterung wird der Erfassungsbereich vergrößert, und / oder die Auflösung in einem Winkelbereich erhöht, was jeweils zur Erhöhung der Robustheit und Genauigkeit der Gesamtlösung führt. Des Weiteren:

a. Durch die Verwendung von Kameras, deren vereinigter erfasster Raumwinkel möglichst groß ist, (z.B. Mehrkamerasystem, welches horizontal die gesamten 360 Grad abdeckt) wird eine hohe Genauigkeit und Robustheit der Eigenbewegungsschätzung erreicht.
b. Die Kombination von a) mit zusätzlich einer oder mehreren Kameras mit hoher Reichweite / Auflösung (Tele-Kamera) erlaubt zusätzlich die Trajektorien von entfernten Objekten genauer zu vermessen, und diese von der durch a) erreichten robusten und genauen Eigenbewegungsschätzung (bzw. von der relativen Bewegung der statischen Umgebung) abzugrenzen.
c. Überlappungsbereiche der Sichtbereiche zweier Kameras entstehen, in welchen absolute Skalierungen der Struktur beobachtbar sind, sofern die Positionen der Kameras relativ zueinander bekannt sind. Durch Nutzung der Ideen a) und b) sind auch absolute Entfernungsschätzungen möglich anhand des Überlappungsbereichs von stark heterogenen Kameras, etwa Tele- und Fischaugenkameras.
d. Durch die in den Überlappungsbereichen vorhandenen Stereo-Tiefeninformationen wird die Erkennung von bewegten Objekten signifikant vereinfacht und auch in für den Mono-Fall mehrdeutigen Situationen möglich, etwa wenn Objekte dieselbe Bewegungsrichtung, aber unterschiedliche Geschwindigkeit aufweisen, was z.B.

im Straßenverkehr nicht unüblich ist.

7. Dynamische Schätzung relevanter Kamera-Parameter: Autokalibrierung von intrinsisch-photometrischen, intrinsisch-geometrischen und extrinsischen Parametern erhöht die Genauigkeit der kalibrierten Parameter deutlich gegenüber einer einmaligen Kalibrierung.

Ein erfindungsgemäßes (computerimplementiertes) Verfahren zur Detektion, 3D-Rekonstruktion und Nachverfolgung von mehreren relativ zueinander bewegten starren Objekten aus einer Folge von Bildern mindestens einer Kamera umfasst die Schritte:

a) Auswählen von Bildern zu bestimmten Aufnahme-Zeitpunkten (=Key-Zyklen) aus der Folge von Bildern der mindestens einen Kamera,

b) gemeinsame Optimierung aller Parameter eines Modells zur Beschreibung der relativ zueinander bewegten starren Objekte anhand der Bilder der Key-Zyklen auf der Basis von spärlich (sparse) selektierten Bildpunkten in den Key-Zyklen, wobei das Modell Parameter zur Beschreibung der Anzahl, der 3D-Struktur, der Posen der starren Objekte in den Key-Zyklen, und einer Zuordnung der selektierten Bildpunkten zu den starren Objekten umfasst, durch

c) Minimierung eines Fehlerfunktionals (S20), wobei das Fehlerfunktional einen photometrischen Fehler $E_{photo}$, der von Intensitäten von Bildern mehrerer Key-Zyklen abhängt, und einen ersten A-Priori-Energie-Term $E_{comp}$, der von der Anzahl an starren Objekten abhängig ist, umfasst, und

d) Zyklische Ausgabe der anhand der (aktuell) aus der Folge von Bildern detektierten Anzahl, 3D-Struktur und Trajektorie der relativ zueinander bewegten starren Objekte.

Die mindestens eine Kamera kann eine einzelne monokulare Kamera oder ein Mehrkamerasystem sein. Die Kamera bzw. das Mehrkamerasystem kann insbesondere in einem Fahrzeug angeordnet sein zur Erfassung der Umgebung des Fahrzeugs während dem Fahrbetrieb des Fahrzeugs. Im Falle eines fahrzeuggebundenen Mehrkamerasystems kann es sich insbesondere um ein Stereokamerasystem oder um ein Rundumsichtkamerasystem (Surround View Camera System) handeln, bei dem z.B. vier an den vier Seiten des Fahrzeugs montierte Satellitenkameras mit großem Öffnungswinkel eine 360 Grad Erfassung der Fahrzeugumgebung gewährleisten, oder auch um eine Kombination aus beiden Kamerasystemen.

Als eines der mehreren relativ zueinander bewegten starren Objekte wird in aller Regel der gesamte stationäre Hintergrund gewählt. Zusätzlich zur starren stationären Umgebung wird mindestens ein weiteres eigenbewegtes starres Objekt detektiert, 3D-rekonstruiert und nachverfolgt (getrackt). Das eigenbewegte starre Objekt bewegt sich somit relativ zu dem stationären "Hintergrundobjekt". Sofern auch die mindestens eine Kamera während der Aufnahme der Folge von Bildern eine Bewegung ausgeführt hat, haben sich das stationäre Hintergrundobjekt relativ zur Kamera und in der Regel auch das eigenbewegte starre Objekt relativ zur Kamera bewegt.

Die Optimierung in Schritt a) erfolgt auf der Basis von spärlich ("sparse") selektierten Bildpunkten bzw. auf der Basis einer spärlichen Menge an Bildpunkten, also nicht auf der Basis von allen Bildpunkten eines Bildes oder Bildausschnittes ("dense") und auch nicht auf zu Teilen dicht ("semi-dense") selektierten Bildbereichen. Beispielsweise zeigen J. Engel et al. in LSD-SLAM: Large-Scale Direct Monocular SLAM, ECCV, September 2014 ein Verfahren mit "semi-dense" Tiefenkarten. Selektiert werden können insbesondere Bildpunkte, welche jeweils einen eigenen Beitrag zur Rekonstruktion der Bewegung liefern, etwa indem sie einen Mindestabstand zu anderen Punkten aufweisen, und sich in charakteristischer Weise von ihrer unmittelbaren Umgebung abheben, so dass sie in folgenden Bildern gut identifizierbar sind. Die 3D-Struktur eines (hypothetischen) Objekts entspricht der räumlichen Geometrie des Objekts. Die Pose eines Objekts entspricht der Position und Orientierung des Objekts im dreidimensionalen Raum. Der zeitliche Verlauf der Posen eines Objekts entspricht der Trajektorie dieses Objekts. Bevorzugt kann die Ausgabe der Parameter, die die Anzahl, 3D-Strukturen und Trajektorien der Objekte festlegen, zyklisch, insbesondere "online" erfolgen, gemeint ist in Echtzeit bzw. kontinuierlich während des Empfangens von neuen Bildern der mindestens einen Kamera. Die Bilder können "so schnell verarbeitet werden wie neue Bilder entstehen".

Gemäß einer bevorzugten Weiterbildung des Verfahrens umfasst das Fehlerfunktional einen zweiten A-Priori-Energie-Term $E_{geo}$, der von der Geometrie (3D-Struktur) der starren Objekte abhängig ist.

Vorzugsweise umfasst das Fehlerfunktional folgende (Modell-) Parameter:

eine inverse Tiefe für jeden selektierten Bildpunkt pro Bewegungsmodell;

eine Anzahl an Bewegungsmodellen, wobei jedem aktuell angenommenen bewegten starren Objekt ein Bewegungsmodell zugeordnet wird;

eine Pose (3D-Position und 3D-Rotation, d.h. 6 Parameter) pro Bewegungsmodell und aktivem Key-Zyklus; und

eine Zuordnungswahrscheinlichkeit jedes selektierten Bildpunkts zu jedem Bewegungsmodell. Nach der Optimierung ist die Zuordnungswahrscheinlichkeit für einen selektierten Bildpunkt für ein Bewegungsmodell gleich eins und für die übrigen Bewegungsmodelle gleich Null.

Optional wird ein Normalenvektor eines jeden selektierten Bildpunkts pro Bewegungsmodell als zusätzliche Parameter berücksichtigt.

Vorzugsweise umfasst das Fehlerfunktional zusätzlich folgende (Modell-) Parameter:

eine Sensor-Kennlinie für jedes Bild und
eine Brennweite und Hauptpunkt für jede Kamera (s. beispielsweise Engel et al. DSO Kapitel 2.1 Calibration), so dass die gemeinsame Optimierung aller Parameter eine Autokalibrierung der mindestens einen Kamera bewirkt.

Bevorzugt wird ein Direct Image Alignment mit einer oder mehreren Bildpyramiden-Stufen für die Nachverfolgung einzelner Objekte durchgeführt. Hierbei kann die relative 3D-Position und 3D-Rotation (Pose) eines in einem Zyklus sichtbaren Objekts auf Basis von Bildern anderer Zyklen und Tiefen-Schätzungen mittels dreidimensionaler Bildregistrierung und optional mittels grob-zu-fein-Ansatz geschätzt werden.

In vorteilhafter Weise werden zur Optimierung des Fehlerfunktionals alternierend Trajektorien- und Strukturparameter mittels photometrischem Bündelausgleich anhand Objekt-spezifischer Key-Zyklen (Pose pro Bewegungsmodell und Key-Zyklus) und die Zugehörigkeit der Bildpunkte zu einem Bewegungsmodell optimiert. Die Auswahl der aus der Bildfolge ausgewählten Key-Zyklen zur Nutzung im photometrischen Bündelausgleich kann Bewegungsmodell-spezifisch getroffen werden. Beispielsweise kann die Frequenz (der ausgewählten Bilder) an die Relativbewegung eines Objekts angepasst werden.

Bevorzugt kann anschließend die Anzahl der Bewegungsmodelle optimiert werden, wobei im Falle des Hinzufügens eines Bewegungsmodells zum Fehlerfunktional oder des Entfernens eines Bewegungsmodells vom Fehlerfunktional eine neue Zuordnung der selektierten Bildpunkte zu den Bewegungsmodellen vorgenommen wird, und die Optimierung des Fehlerfunktionals neu begonnen wird.

Vorzugsweise führt die mindestens eine Kamera gegenüber dem Objekt, welches dem stationären starren Hintergrund entspricht, eine Bewegung aus.

In einer bevorzugten Ausführungsform des Verfahrens wird eine Mehrzahl von Bildfolgen mittels einem mehrere synchronisierte (Fahrzeug-) Kameras umfassenden Kamerasystem aufgenommen und als Eingangsdaten für das Verfahren bereitgestellt. Eine gemeinsame Optimierung aller Parameter zur Minimierung des resultierenden Fehlerfunktionals wird durchgeführt. Die Modell-Parameter umfassen die Posen jedes Objekts bezüglich des Kamerasystems (statt bezüglich einer Kamera). Bildpunkte können aus Bildern aller Kameras selektiert werden. Bildpunkte werden aus Bildern der Key-Zyklen von mindestens einer Kamera selektiert.

Für selektierte Bildpunkte gehen die Beobachtungen in mindestens einer Kamera und mindestens einem Key-Zyklus als Energie-Terme des photometrischen Fehlers ein. Hierbei werden bevorzugt individuelle geometrische und photometrische Kameramodelle sowie Relativpositionen der Kameras zueinander berücksichtigt.

Bevorzugt wird des Weiteren ein Multi Kamera Direct Image Alignment mit einer oder mehreren Pyramidenstufen für die Nachverfolgung einzelner Objekte durchgeführt. Verwendet werden hierzu bevorzugt folgende Bilder:

a) Alle Bilder aller Zyklen, in welchen die Pose schon bekannt ist und wo Punkte selektiert sind mit bekannten Tiefen. Diese werden wiederholt kombiniert und dabei gewarped (für jede Kamera entsteht eine Prädiktion des erwarteten Bildes in dem Zyklus, in welchem die Pose gesucht wird).
b) Alle Bilder des Zyklus, für welchen die Pose gesucht wird. Diese werden jeweils wiederholt verglichen mit dem für diese Kamera kombinierten Prädiktions-Bild aus a).

Vorzugsweise umfassen die Modell-Parameter weitere intrinsische photometrische, weitere intrinsische geometrische und/oder extrinsische Kamera-Parameter der mindestens einen Kamera, so dass die gemeinsame Optimierung aller Parameter eine Autokalibrierung der mindestens einen Kamera bewirkt. Mit anderen Worten erfolgt eine Autokalibrierung / automatische Optimierung von intrinsischen photometrischen (etwa Vignettierung und Sensor-Kennlinie), intrinsischen geometrischen (etwa Brennweite, Hauptpunkt, Verzeichnung) und/oder extrinsischen Modellparametern der Kamera (etwa relative Lage der Kameras zueinander). Vignettierung, Sensor-Kennlinie und Verzeichnung werden bevorzugt parametrisch approximiert. Alle neuen Modell-Parameter können somit bei der Minimierung des Fehlerfunktionals (in einem Zug) mitbestimmt werden.

Ein weiterer Gegenstand der Erfindung betrifft eine Vorrichtung zur Detektion, 3D-Rekonstruktion und Nachverfolgung von mehreren relativ zueinander bewegten starren Objekten aus einer Folge von von einer Eingangseinheit empfangenen Bildern mindestens einer (Fahrzeug-) Kamera. Die Vorrichtung umfasst die Eingangseinheit, eine Auswahleinheit, eine Optimierungseinheit und eine Ausgabeeinheit.

Die Auswahleinheit ist dazu konfiguriert, aus der Folge von Bildern Bilder von mehreren (durch die Auswahleinheit bestimmten) Aufnahmezeitpunkten (=Key-Zyklen) auszuwählen.

Die Optimierungseinheit ist konfiguriert zur

a) gemeinsamen Optimierung aller Modellparameter eines Modells zur Beschreibung der relativ zueinander bewegten starren Objekte anhand der Bilder der Key-Zyklen auf der Basis von spärlich selektierten Bildpunkten in den Key-Zyklen, wobei das Modell Parameter zur Beschreibung der Anzahl, der 3D-Struktur, der Posen der starren Objekte in den Key-Zyklen und eine Zuordnung der selektierten Bildpunkte zu den starren Objekten umfasst, durch
b) Minimierung eines Fehlerfunktionals, wobei das Fehlerfunktional einen photometrischen Fehler $E_{photo}$ und einen ersten A-Priori-Energie-Term $E_{comp}$, der von der Anzahl an starren Objekten abhängig ist, umfasst.

Die Ausgabeeinheit ist konfiguriert zur zyklischen Ausgabe der durch Optimierungseinheit aus der Folge von Bildern detektierten Anzahl, 3D-Struktur (Geometrie) und Trajektorie der relativ zueinander bewegten starren Objekte.
Die Vorrichtung kann insbesondere einen Mikrocontroller oder -prozessor, eine Zentrale Verarbeitungseinheit (CPU), einen Grafikprozessor (GPU), einen Digital Signal Processor (DSP), einen ASIC (Application Specific Integrated Circuit), einen FPGA (Field Programmable Gate Array) und dergleichen mehr; Schnittstellen (Eingangs- und Ausgabeeinheit) sowie Software zur Durchführung der entsprechenden Verfahrensschritte umfassen.
Die vorliegende Erfindung kann somit in digitalen elektronischen Schaltkreisen, Computer-Hardware, Firmware oder Software implementiert sein.
Im Folgenden werden Ausführungsbeispiele und Fig. näher beschrieben. Dabei zeigen

Fig. 1a: eine Serie von fünf Bildern einer linken Seitenkamera eines Ego-Fahrzeugs;
Fig. 1b: eine 3D-Rekonstruktion der Umgebung des Ego-Fahrzeugs;
Fig. 1c: eine 3D-Rekonstruktion eines ersten (eigenbewegten) starren Objekts;
Fig. 1d: eine 3D-Rekonstruktion eines zweiten (stationären) starren Objekts, welches dem stationären Hintergrund entspricht;
Fig. 2: vier schematische Kamerabilder eines Surround View (Rundumsicht-) Systems eines Ego-Fahrzeugs (unten) und eine 3D-Punkt Rekonstruktion der Umgebung des Ego-Fahrzeugs (oben);
Fig. 3: schematisch einen Ablauf eines Verfahrens für ein Multi-Kamera System;
Fig. 4: ein schematisches Diagramm zum Ablauf eines Verfahrens zur Datenselektion und Minimierung des Fehlerfunktionals für einen Zyklus von Einzelbildern; und
Fig. 5: Ego-Fahrzeug mit einem Rundumsichtkamerasystem, einer Front-Telekamera und einer Vorrichtung zur Detektion, 3D-Rekonstruktion und Nachverfolgung von mehreren relativ zueinander bewegten starren Objekten.

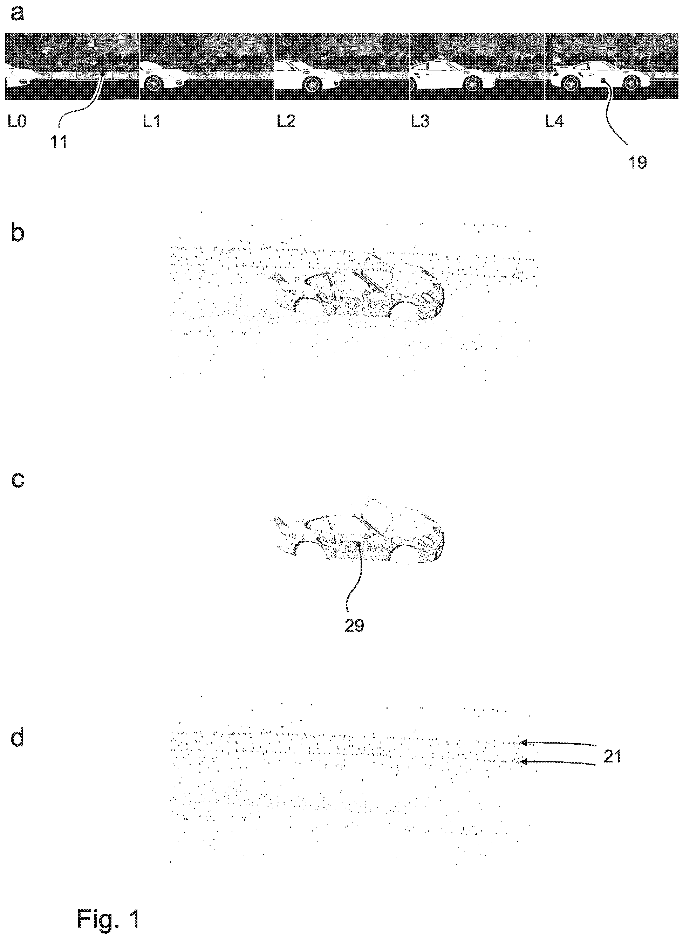

Fig. 1a zeigt eine Serie von fünf Bildern (L0, L1, ..., L4), die von einer linken Seitenkamera eines Ego-Fahrzeugs während der Fahrt des Ego-Fahrzeugs zu Aufnahmezeitpunkten t0, ..., t4 aufgenommen wurden. Auf den Bildern L0, ., L4 ist ein auf einer Überholspur links neben dem Ego-Fahrzeug fahrendes Fahrzeug 19 zu sehen. Der linke Fahrbahnrand wird durch eine Mauer 11 begrenzt. Dahinter sind Bäume, die neben der Fahrbahn stehen im oberen Drittel des Bildes zu erahnen. Die Mauer 11, die Bäume, die Fahrbahn sowie Fahrspurmarkierungen sind Bestandteile der stationären Umgebung des Ego-Fahrzeugs. Die gesamte stationäre Umgebung des Ego-Fahrzeugs wird als ein starres Objekt betrachtet. Das abgebildete Fahrzeug 19 ist ein eigenbewegtes starres Objekt, welches sich relativ zum ersten Objekt (der stationären Umgebung) bewegt. Das abgebildete Fahrzeug 19 fährt schneller als das Ego-Fahrzeug, ist also dabei das Ego-Fahrzeug zu überholen.
Wenn das Verfahren auf der Basis von nur einer Kamera durchgeführt werden soll, entspricht jeweils ein Bild einem (Aufnahme-) Zyklus. Angenommen, die fünf Bilder sind fünf Key-Zyklen für das abgebildete Fahrzeug (=Objekt, dem wiederum ein Bewegungsmodell zugeordnet ist), dann werden diese Key-Zyklen als Bewegungsmodell-spezifische Key-Zyklen bezeichnet.

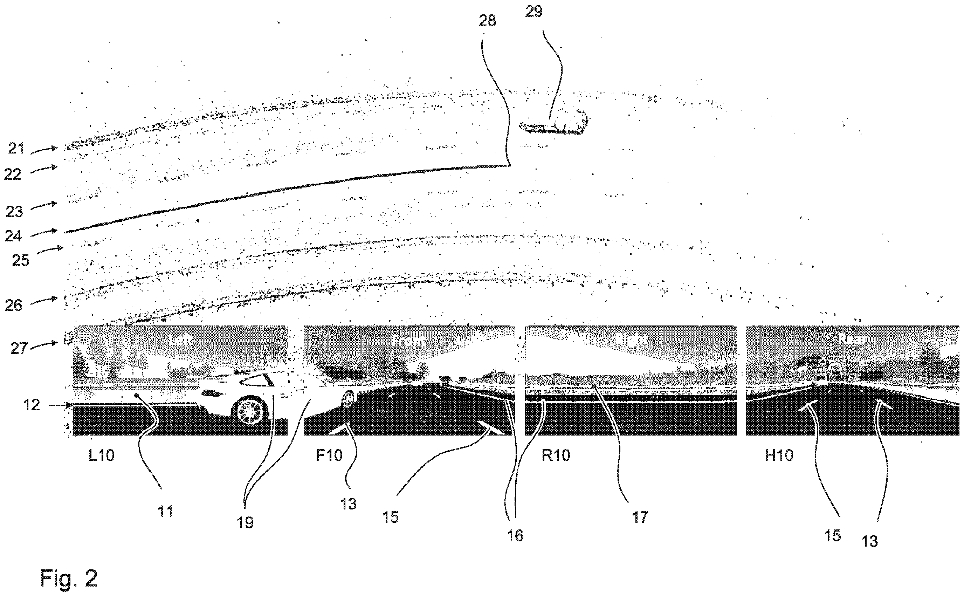

Fig. 1b zeigt eine 3D-Rekonstruktion dieser Szene, die gemäß einer Ausführungsform des Verfahrens erzielt wurde. Für diese 3D-Rekonstruktion wurden aber nicht nur die in Fig. 1a auszugsweise dargestellten Key-Zyklen der linken Kamera, sondern auch die Key-Zyklen, die zu denselben Aufnahmezeitpunkten t0, ..., t4 von der synchronisierten hinteren, Front- und rechten Kamera des Kamerasystems aufgenommen wurden. Dies wird später im Zusammenhang mit Figur 2 weiter erläutert. In Fig. 1b zu sehen sind Punkte, die die 3D-Verhältnisse nicht vollständig aber doch grob erkennbar wiedergeben (sparse). Die 3D-Rekonstruktion erfolgte aus einem Blickwinkel, bei dem gegenüber der Kamerarichtung in Fig. 1a etwas von oben herab gesehen wird. Abgebildet sind das (weitere) Fahrzeug, dessen räumliche Form gut abgeschätzt werden kann und einige Aspekte der starren Umgebung, insbesondere die Mauer als zwei parallele Linien hinter bzw. oberhalb des Fahrzeugs. Auf der Fahrbahn sind einzelne Punkte vorhanden.
Fig. 1c zeigt die 3D-Rekonstruktion nur des weiteren Fahrzeugs 29 aus Fig. 1b. Bei diesem Fahrzeug 29 handelt es sich um ein bewegtes starres Objekt. Das Verfahren ermöglicht ein zuverlässiges Tracking (Nachverfolgen) des Fahrzeugs 19 aus der Serie von Bildern L0, ..., L4. Neben der 3D-Position und Größe kann aus dem Tracking auch die Trajektorie des Fahrzeugs 19 bestimmt werden, also insbesondere die Geschwindigkeit und Rotation in allen drei Raumrichtungen.

Fig. 1d zeigt die 3D-Rekonstruktion nur der stationären (unbewegten) starren Umgebung des Ego-Fahrzeugs aus Fig. 1b. Auch die stationäre starre Umgebung des Ego-Fahrzeugs wird als ein (relativ) bewegtes starres Objekt behandelt. Die Lokalisierung des Ego-Fahrzeugs in dieser Umgebung ergibt sich dabei unmittelbar. Die mit dem Ansatz ermittelte Relativbewegung der rekonstruierten Umgebung ist identisch zur inversen Eigenbewegung des Ego-Fahrzeugs. Die 3D-Rekonstruktion der Mauer 11 aus Fig. 1a ist als zwei parallele Linien 29 zu erkennen.

Fig. 2 zeigt unten vier schematische Kamerabilder L10, F10, R10, H10 eines Surround View (Rundumsicht-) Systems eines Ego-Fahrzeugs und oben eine 3D-Punkt Rekonstruktion der Umgebung des Ego-Fahrzeugs.

Unten links ist ein rektifiziertes Bild L10 einer nach links blickenden Fahrzeugkamera zu sehen. Daneben sind die rektifizierten Bilder F10, R10, H10 einer nach vorne, einer nach rechts und einer nach hinten blickenden Fahrzeugkamera abgebildet. Zu erkennen sind in allen vier Bildern L10, F10, R10, H10 jeweils die schwarze Fahrbahnoberfläche mit weißen Fahrbahnmarkierungen 12, 13, 15, 16 im jeweiligen Sichtbereich. Schräg links vor dem Ego-Fahrzeug fährt ein weiteres Fahrzeug 19. Der hintere Teil des weiteren Fahrzeugs 19 ist im Bild L10 der linken Kamera erfasst, der vordere Teil im Bild F10 der Frontkamera. Das abgebildete Fahrzeug 19 ist ein eigenbewegtes starres Objekt. Im Bild L10 der linken Kamera ist wieder eine Mauer 11 als Fahrbahnrandbegrenzung zwischen der Fahrbahn und der die Fahrbahn umgebenden Landschaft (Bäume, Hügel) zu erkennen. Unterhalb der Mauer 11 ist eine durchgezogene Fahrspurbegrenzungsmarkierung (Linie) 12 abgebildet, die den Rand der linken Fahrspur der dreispurigen Fahrbahn begrenzt. Im Bild F10 der Frontkamera des Surround View Systems sind eine linke 13 und eine rechte 15 gestrichelte Fahrspurmarkierung abgebildet, die den linken und rechten Rand der mittleren Fahrspur begrenzen, auf der das Ego-Fahrzeug aktuell fährt. Der rechte Rand der Fahrbahn ist durch eine weitere durchgezogene Fahrspurbegrenzungsmarkierung 16 gekennzeichnet. Im Bild R10 der rechten Kamera ist eine Leitplanke 17 als Fahrbahnrandbegrenzung abgebildet, darunter ist die rechte Fahrspurbegrenzungsmarkierung 16 zu erkennen. Aus dem Bild H10 der Rückkamera ist ebenfalls zu erkennen, dass das Ego-Fahrzeug auf der mittleren der drei Fahrspuren fährt, auch hier sind zwischen den beiden durchgezogenen Fahrspurbegrenzungsmarkierungen (im Bild R10 nicht nummeriert) links im Bild die rechte Fahrspurmarkierung 15 und rechts im Bild die linke Fahrspurmarkierung 13 der Ego-Fahrspur als gestrichelte Linien erkennbar. Im oberen Teil aller vier Bilder ist der Himmel zu erahnen. Die Mauer 11, die Fahrbahnmarkierungen 12, 13, 15, 16 und die Leitplanke 17 sind Bestandteile der stationären Umgebung des Ego-Fahrzeugs. Die gesamte stationäre Umgebung des Ego-Fahrzeugs wird als ein starres Objekt betrachtet.

Im Verlauf der Fahrt des Ego-Fahrzeug werden Serien von Bildern (Videos) von jeder der vier Kameras aufgenommen. Aus diesen Bilderserien wurde eine 3D-Rekonstruktion der Szene gemäß einer Ausführungsform des Verfahrens mit mehreren (synchronisierten) Kameras erzielt. In Fig. 2 oben zu sehen sind Punkte, die die 3D-Verhältnisse repräsentieren. Die Visualisierung erfolgte aus einer Vogelperspektive (Top View). Als durchgezogene Linie 24 ist die bisherige Trajektorie des Ego-Fahrzeugs veranschaulicht. Diese Linie ist nicht Bestandteil der 3D-Strukturen, visualisiert jedoch die rekonstruierte Trajektorie des Kamerasystems des Ego-Fahrzeugs. Das rechte Ende 28 der Linie 24 entspricht der aktuellen Position des Ego-Fahrzeugs, welches selbst nicht in Fig. 2 dargestellt ist. Links vor (bzw. rechts oberhalb in Fig. 2 oben) dem Ego-Fahrzeug sind die Umrisse des weiteren Fahrzeugs 29 zu erkennen. Das bewegte Objekt ist robust und sehr präzise nachverfolgbar, so dass seine Eigenschaften für Systeme zum assistierten oder automatisierten Fahren für das Ego-Fahrzeug ermittelt werden können. Der 3D-Rekonstruktion sind als Bestandteile des unbewegten Hintergrunds folgende Elemente zu entnehmen (von oben nach unten): die Mauer (Begrenzung des linken Fahrspurrands) als etwas dichtere und etwas ausgedehntere Linie 21 (bestehend aus Punkten), die linke durchgezogene Fahrspurbegrenzungsmarkierung 22, die linke gestrichelte Fahrspurmarkierung 23 der Ego-Fahrspur, die rechte gestrichelte Fahrspurmarkierung 25 der Ego-Fahrspur, die rechte durchgezogene Fahrspurbegrenzungsmarkierung 26 und die wiederum etwas dichtere und ausgedehntere Linie 27 mit einzelnen Pfosten der Leitplanke. Zwischen der rechten durchgezogenen Fahrspurbegrenzungsmarkierung 26 und der Leitplanken-"Linie" 27 befindet sich der Standstreifen der Fahrbahn.

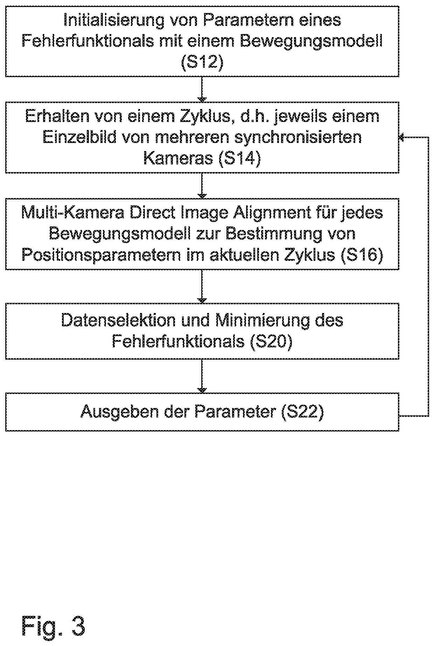

Fig. 3 zeigt exemplarisch den Ablauf eines Ausführungsbeispiels des Verfahrens für ein Multi-Kamera System. Ein vergleichbares Verfahren ist mit einzelnen Abwandlungen auch auf ein Monokamerasystem anwendbar.

In einem ersten Schritt S12 werden Parameter eines Fehlerfunktionals initialisiert. Das Fehlerfunktional dient der Berechnung eines Fehlers für Einzelbilder eines Zyklus in Abhängigkeit von Parametern. Eine Minimierung des Fehlerfunktionals liefert somit die Parameter, die das Modell optimal an die Einzelbilder anpasst. Parameter sind:

- Tiefenparameter mehrerer Punkte mehrerer Bilder für mehrere Objekte
- Optional: Normalen-Vektor jedes selektierten Punktes (2 Parameter pro Punkt)
- Anzahl der Bewegungsmodelle
- Mehrere Bewegungsmodelle (jeweils 3+3 Parameter für Position und Rotation jeweils für jeden Zeitschritt), wobei ein Bewegungsmodell einem Objekt zugeordnet ist. Der starre Hintergrund (d.h. die im realen Raum unbewegte Umgebung) wird ebenfalls als ein Objekt behandelt. Auch dem Hintergrund-Objekt wird ein Bewegungsmodell zugeordnet.

- Zuordnung von Punkten zu Bewegungsmodellen (1 Parameter pro Punkt und Bewegungsmodell, mittels Soft-Assignment oder optional Hard-Assignment)
- Schätzung von Sensor-Kennlinien und
- Schätzung von Brennweite und Hauptpunkt.

Eine Initialisierung der Parameter kann erfolgen, indem für die Anzahl der Bewegungsmodelle 1 gewählt wird, die Trajektorie mit 0, und die inversen Tiefen mit 1 initialisiert werden, und hiermit eine grob-zu-fein-Initialisierung vorgenommen wird.

In einem Schritt S14 werden neue Einzelbilder eines Zyklus von mehreren synchronisierten Kameras erhalten. Ein Zyklus beschreibt die Menge an Bildern, die von den synchronisierten Kameras in einem Aufnahmezyklus (entspricht einem Aufnahmezeitpunkt) entsteht. Die neuen Einzelbilder werden dem Verfahren bzw. dem System bereitgestellt, z.B. von den Kameras, einem Speicher oder dergleichen mehr.

In einem folgenden Schritt S16 wird für jedes aktuell vorhandene Bewegungsmodell (korrespondierend zu einem aktuell angenommenen Objekt bzw. zu einer aktuellen Objekthypothese) ein Multi-Kamera Direct Image Alignment durchgeführt zur Bestimmung der Bewegungsparameter im aktuellen Zyklus (mit den neuen Einzelbildern). Beispielsweise kann angenommen werden, dass aktuell ein bewegtes starres Objekt sich relativ zum stationären starren Hintergrund bewegt. Da der stationäre Hintergrund ebenfalls als ein bewegtes starres Objekt behandelt wird, ist dies der einfachste Fall für mehrere, nämlich zwei unterschiedlich bewegte starre Objekte. Die Kameras können gegenüber dem stationären Hintergrund eine Bewegung ausführen, so dass in der Folge der Einzelbilder der Hintergrund nicht stationär im Kamerasystem-Koodinatensystem ist, sondern eine Relativ-Bewegung ausführt. Jedes aktuell angenommene Objekt wird durch ein Bewegungsmodell beschrieben. Die (Posen-) Parameter für jedes Objekt für den neuen (d.h. aktuellen) Zyklus werden mittels Multi-Kamera Direct Image Alignment bestimmt.

Direct Image Alignment ist nicht dasselbe wie Bundle Adjustment, hat aber Gemeinsamkeiten mit Photometric Bundle Adjustment: Das zu minimierende photometrische Fehlerfunktional ist dasselbe. Bei Direct Image Alignment werden die Tiefen nicht optimiert, sondern als bekannt vorausgesetzt und es wird nur die neue Pose geschätzt, während man einen photometrischen Fehler (Differenz von Grauwerten) minimiert. Hierbei werden iterativ Vorhersagen der Bilder eines neuen Zyklus mittels Image-Warping bzw. ähnlich einem 3D-Rendering generiert (auf Basis alter Bilder, bekannter Struktur, Trajektorie), und die neueste Objektpose angepasst, bis die Vorhersage mit den neuen Bildern am ähnlichsten ist. Näheres zum Homographie-basierten Single-Kamera Direct Image Alignment zeigt beispielsweise: https://sites.google.com/site/imagealignment/tutorials/feature-based-vs-direct-imag e-alignment (abgerufen am 12.03.2019).

Anschließend werden in Schritt S20 Daten (Key-Zyklen, Bildpunkte) selektiert und das Fehlerfunktional minimiert. Details hierzu werden nachfolgend näher erläutert. Die dabei erhaltenen Parameter werden im folgenden Schritt S22 ausgegeben. Anschließend kann mit Schritt 14 fortgefahren werden, also dem Erhalten von neuen Einzelbildern eines neuen Zyklus.

Fig. 4 zeigt ein schematisches Diagramm zum Ablauf eines Verfahrens zur Datenselektion und Minimierung des Fehlerfunktionals (S20 in Fig. 3) für einen Zyklus von Einzelbildern und anschließender Ausgabe der Parameter (S22).

In einem ersten Schritt S200 werden Key-Zyklen für jedes Bewegungsmodell (entsprechend einem Objekt) aus der Menge aller Kamera-Zyklen ausgewählt.

In einem Schritt S201 werden Punkte in Bildern der Key-Zyklen aller Bewegungsmodelle ausgewählt.

In einem Schritt S202 werden neue Parameter des Fehlerfunktionals zur Beschreibung weiterer Punkt-Tiefen und Punkt-Zugehörigkeiten initialisiert.

In Schritt S203 werden die Bewegungs- und Strukturparameter für jedes Objekt mittels photometrischem Bundle-Adjustment anhand Objekt-spezifischer Key-Zyklen optimiert.

In Schritt S204 wird ein Multi-Kamera Direct Image Alignment für Objekt-fremde Key-Zyklen durchgeführt.

In Schritt S205 wird die Zugehörigkeit eines Bildpunkts zu einem Objekt bzw. Bewegungsmodell optimiert.

In einem folgenden Schritt S206 wird geprüft, ob eine (hinreichende) Konvergenz erreicht wurde. Ist dies (noch) nicht der Fall, da die Punkt-Zugehörigkeiten verändert wurden, wird mit Schritt S200 fortgefahren.

Falls die Konvergenz erreicht wurde, wird im folgenden Schritt S207 die Anzahl der Bewegungsmodelle (Objekte) sowie die Zugehörigkeit eines Bildpunkts zu einem Bewegungsmodell optimiert.

In einem folgenden Schritt S208 wird geprüft, ob diesbezüglich eine (hinreichende) Konvergenz erreicht wurde.

Falls die Anzahl nicht passt, wird in einem folgenden Schritt S209 die Anzahl an Bewegungsmodellen überprüft.

Sofern die Anzahl zu hoch ist, wird in Schritt S210 ein Bewegungsmodell und die zugehörigen Parameter entfernt und das Verfahren wird mit Schritt S200 fortgesetzt. Dazu kann folgendermaßen vorgegangen werden:

Für jedes Objekt wird regelmäßig eine neue Konfigurations-Hypothese evaluiert, welche dieses Objekt nicht mehr beinhaltet. Es wird geprüft, ob der Gesamtfehler dadurch sinkt. Falls ja, wird die Konfiguration übernommen, bzw. das Objekt entfernt.

Eine obere Schranke für diesen neuen Gesamtfehler kann ermittelt werden, indem nur die Punktzuordnungen der betroffenen Punkte optimiert werden, und alle Struktur- und Trajektorienparameter beibehalten werden. Dieses Vorgehen ist dann sehr schnell (vgl. mit der kompletten Optimierung von solchen neuen Hypothesen mit einem fehlenden Objekt). Siehe hierzu auch den obigen Abschnitt Hypothesenbildung (2): Eliminierung eines Bewegungsmodells.

Sofern die Anzahl zu niedrig ist, werden in Schritt S211 neue Parameter zur Beschreibung eines weiteren Bewegungsmodells (Objekts) des Fehlerfunktionals initialisiert (siehe oben: Hypothesenbildung (1): Detektion eines weiteren Bewegungsmodells) und das Verfahren wird mit Schritt S200 fortgesetzt.

Sofern die Anzahl passt, also in Schritt S208 Konvergenz erreicht wurde, werden die Parameter in Schritt S22 ausgegeben.

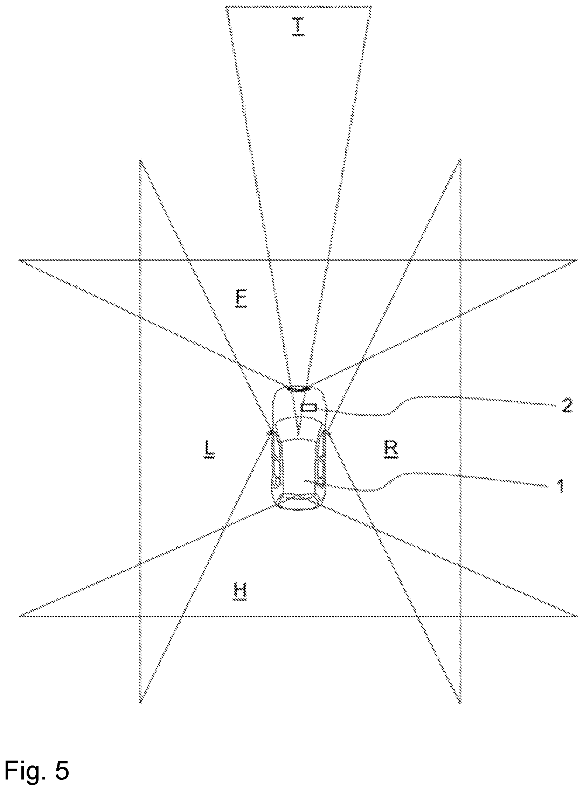

Fig. 5 zeigt ein Ego-Fahrzeug 1 mit einem Rundumsichtkamerasystem, einer Front-Telekamera und einer Vorrichtung 2 zur Detektion, 3D-Rekonstruktion und Nachverfolgung von mehreren relativ zueinander bewegten starren Objekten. Die Erfassungsbereiche der vier Einzelkameras des Rundumsichtsystems sind durch die vier Dreiecksflächen (L, F, R, H) um das Ego-Fahrzeug 1 veranschaulicht. Die Dreiecksfläche L (F, R, bzw. H) auf der linken (Front-, rechten bzw. Heck-) Seite des Ego-Fahrzeugs entspricht dem Erfassungsbereich der linken (Front-, rechten bzw. Heck-) Kamera des Rundumsichtkamerasystems. Im Bereich der Windschutzscheibe des Fahrzeugs 1 ist eine Telekamera angeordnet, deren Erfassungsbereich T als Dreieck mit punktierten Linien dargestellt ist. Bei der Telekamera kann es sich beispielsweise um eine Stereokamera handeln. Die Kameras sind mit der Vorrichtung 2 verbunden und übermitteln die aufgenommenen Bilder bzw. Bilderserien an die Vorrichtung 2.

**Patentansprüche**

1. Verfahren zur Detektion, 3D-Rekonstruktion und Nachverfolgung von mehreren relativ zueinander bewegten starren Objekten (11, 13, 15, 16, 17; 19) aus einer Folge von Bildern mindestens einer Kamera umfassend die Schritte:

   a) Auswählen von Bildern von bestimmten Aufnahme-Zeitpunkten (=Key-Zyklen) aus der Folge von Bildern der mindestens einen Kamera,
   b) gemeinsame Optimierung aller Parameter eines Modells zur Beschreibung der starren Objekte (11, 13, 15, 16, 17; 19) anhand der Bilder der Key-Zyklen auf der Basis von spärlich selektierten Bildpunkten in den Key-Zyklen, wobei das Modell Parameter zur Beschreibung der Anzahl, der 3D-Struktur, der Posen der starren Objekte (11, 13, 15, 16, 17; 19) in den Key-Zyklen, und einer Zuordnung der selektierten Bildpunkte zu den starren Objekten (11, 13, 15, 16, 17; 19) umfasst, durch
   c) Minimierung eines Fehlerfunktionals (S20), wobei das Fehlerfunktional einen photometrischen Fehler $E_{photo}$, der von Intensitäten von Bildern mehrerer Key-Zyklen abhängt, und einen ersten A-Priori-Energie-Term $E_{comp}$, der von der Anzahl an starren Objekten (11, 13, 15, 16, 17; 19) abhängig ist, umfasst, und
   d) Ausgabe der aus der Folge von Bildern detektierten Anzahl, 3D-Struktur und Trajektorie der starren Objekte (11, 13, 15, 16, 17; 19).

2. Verfahren nach Anspruch 1, wobei das Fehlerfunktional einen zweiten A-Priori-Energie-Term $E_{geo}$ umfasst, der von der 3D-Struktur der starren Objekte (11, 13, 15, 16, 17; 19) abhängig ist.

3. Verfahren nach Anspruch 1 oder 2, wobei das Fehlerfunktional folgende Modell-Parameter umfasst:

   eine inverse Tiefe für jeden selektierten Bildpunkt pro Bewegungsmodell;
   eine Anzahl an Bewegungsmodellen, wobei jedem aktuell angenommenen starren Objekt (11, 13, 15, 16, 17; 19) ein Bewegungsmodell zugeordnet wird;
   eine Pose pro Bewegungsmodell und aktivem Key-Zyklus; und
   die Zuordnungswahrscheinlichkeit jedes selektierten Bildpunkts zu jedem Bewegungsmodell.

4. Verfahren nach Anspruch 3, wobei das Fehlerfunktional zusätzlich folgende Modell-Parameter umfasst:

   eine Sensor-Kennlinie für jedes Bild und
   eine Brennweite und einen Hauptpunkt für jede Kamera, so dass die gemeinsame Optimierung aller Parameter eine Autokalibrierung der mindestens einen Kamera bewirkt.

5. Verfahren nach einem der vorhergehenden Ansprüche, wobei ein Direct Image Alignment mit einer oder mehreren Bildpyramiden-Stufen für die Nachverfolgung einzelner Objekte (11, 13, 15, 16, 17; 19) durchgeführt wird.

6. Verfahren nach einem der vorhergehenden Ansprüche, wobei zur Optimierung des Fehlerfunktionals alternierend Trajektorien- und Strukturparameter mittels photometrischem Bündelausgleich anhand Objekt-spezifischer Key-Zyklen (S203) und die Zugehörigkeit der Bildpunkte zu einem Bewegungsmodell optimiert werden (S205).

7. Verfahren nach Anspruch 6, wobei anschließend die Anzahl der Bewegungsmodelle optimiert wird (S207), wobei im Falle des Hinzufügens eines Bewegungsmodells zum Fehlerfunktional oder des Entfernens eines Bewegungsmodells vom Fehlerfunktional eine neue Zuordnung von den selektierten Bildpunkten zu den Bewegungsmodellen vorgenommen wird, und die Optimierung des Fehlerfunktionals neu begonnen wird.

8. Verfahren nach einem der vorhergehenden Ansprüche, wobei die mindestens eine Kamera gegenüber dem Objekt (11, 13, 15, 16, 17), welches dem stationären starren Hintergrund entspricht, eine Bewegung ausführt.

9. Verfahren nach einem der vorhergehenden Ansprüche, wobei eine Mehrzahl von Bildfolgen mittels einem mehrere synchronisierte Kameras umfassenden Kamerasystem aufgenommen wird, wobei die Modell-Parameter die Posen jeden Objekts (11, 13, 15, 16, 17; 19) bezüglich des Kamerasystems umfassen, wobei Bildpunkte aus allen Kameras selektiert werden können, wobei Bildpunkte aus Bildern der Key-Zyklen von mindestens einer Kamera selektiert werden, wobei für selektierte Bildpunkte die Beobachtungen in mindestens einer Kamera und mindestens einem Key-Zyklus als Energie-Terme des photometrischen Fehlers eingehen und wobei eine gemeinsame Optimierung aller Parameter zur Minimierung des resultierenden Fehlerfunktionals durchgeführt wird.

10. Verfahren nach Anspruch 9, wobei ein Multi Kamera Direct Image Alignment mit einer oder mehreren Bildpyramidenstufen für die Nachverfolgung einzelner Objekte (11, 13, 15, 16, 17; 19) durchgeführt wird, wobei eine gemeinsame Optimierung aller Modellparameter zur Minimierung des resultierenden Fehlerfunktionals durchgeführt wird, wobei die Modell-Parameter die Posen jeden Objekts (11, 13, 15, 16, 17; 19) bezüglich des Kamerasystems umfassen, wobei für selektierte Bildpunkte die Beobachtungen in mindestens einer Kamera des zu optimierenden Zyklus als Energie-Terme des photometrischen Fehlers eingehen.

11. Verfahren nach einem der Ansprüche 4 bis 10, wobei die Modell-Parameter weitere intrinsische photometrische, weitere intrinsische geometrische und/oder extrinsische Kameraparameter der mindestens einen Kamera umfassen, so dass die gemeinsame Optimierung aller Parameter eine Autokalibrierung der mindestens einen Kamera bewirkt.

12. Vorrichtung (2) zur Detektion, 3D-Rekonstruktion und Nachverfolgung von mehreren relativ zueinander bewegten starren Objekten (11, 13, 15, 16, 17; 19) aus einer Folge von von einer Eingangseinheit empfangenen Bildern mindestens einer Kamera, umfassend die Eingangseinheit, eine Auswahleinheit, eine Optimierungseinheit und eine Ausgabeeinheit, wobei
die Auswahleinheit dazu konfiguriert ist,

   a) aus der Folge von Bildern der mindestens einen Kamera Bilder von bestimmten Aufnahmezeitpunkten (=Key-Zyklen) auszuwählen;
   die Optimierungseinheit konfiguriert ist zur
   b) gemeinsamen Optimierung aller Modellparameter eines Modells zur Beschreibung der relativ zueinander bewegten starren Objekte (11, 13, 15, 16, 17; 19) anhand der Bilder der Key-Zyklen auf der Basis von spärlich selektierten Bildpunkten in den Key-Zyklen, wobei das Modell Parameter zur Beschreibung der Anzahl, der 3D-Struktur, der Posen der starren Objekte (11, 13, 15, 16, 17; 19) in den Key-Zyklen und einer Zuordnung der selektierten Bildpunkte zu den starren Objekten (11, 13, 15, 16, 17; 19) umfasst, durch
   c) Minimierung eines Fehlerfunktionals, wobei das Fehlerfunktional einen photometrischen Fehler $E_{photo}$ und einen ersten A-Priori-Energie-Term $E_{comp}$, der von der Anzahl an starren Objekten (11, 13, 15, 16, 17; 19) abhängig ist, umfasst, und
   die Ausgabeeinheit konfiguriert ist zur
   d) Ausgabe der aus der Folge von Bildern detektierten Anzahl, 3D-Struktur und Trajektorie der starren Objekte (11, 13, 15, 16, 17; 19).

## Claims

1. Method for the detection, 3D reconstruction and tracking of a plurality of rigid objects (11, 13, 15, 16, 17; 19) moving relative to one another from a sequence of images from at least one camera, comprising the following steps:

   a) selecting images at specific recording times (= key cycles) from the sequence of images from the at least one camera,

b) jointly optimizing all parameters of a model for describing the rigid objects (11, 13, 15, 16, 17; 19) by means of the images from the key cycles on the basis of sparsely selected pixels in the key cycles, wherein the model comprises parameters for describing the number, the 3D structure, the poses of the rigid objects (11, 13, 15, 16, 17; 19) in the key cycles, and an assignment of the selected pixels to the rigid objects (11, 13, 15, 16, 17; 19), by

c) minimizing an error functional (S20), wherein the error functional comprises a photometric error $E_{photo}$, which is dependent on intensities of images from a plurality of key cycles, and a first a-priori energy term $E_{comp}$, which is dependent on the number of rigid objects (11, 13, 15, 16, 17; 19), and

d) outputting the number, 3D structure and trajectory of the rigid objects (11, 13, 15, 16, 17; 19) detected from the sequence of images.

2. Method according to Claim 1, wherein the error functional comprises a second a-priori energy term $E_{geo}$, which is dependent on the 3D structure of the rigid objects (11, 13, 15, 16, 17; 19).

3. Method according to Claim 1 or 2, wherein the error functional comprises the following model parameters:

an inverse depth for each selected pixel per movement model;
a number of movement models, wherein a movement model is assigned to each currently assumed rigid object (11, 13, 15, 16, 17; 19);
a pose per movement model and active key cycle; and
the assignment probability of each selected pixel to each movement model.

4. Method according to Claim 3, wherein the error functional additionally comprises the following model parameters:

a sensor characteristic curve for each image, and
a focal length and a principal point for each camera so that the joint optimization of all parameters brings about an autocalibration of the at least one camera.

5. Method according to any of the preceding claims, wherein a direct image alignment is performed with one or more image pyramid levels for the tracking of individual objects (11, 13, 15, 16, 17; 19).

6. Method according to any of the preceding claims, wherein, for the purpose of optimizing the error functional, alternately, trajectory and structural parameters are optimized by means of photometric bundle adjustment on the basis of object-specific key cycles (S203) and the association of the pixels with a movement model is optimized (S205).

7. Method according to Claim 6, wherein the number of movement models is subsequently optimized (S207), wherein in the event of a movement model being added to the error functional or a movement model being removed from the error functional, a new assignment of the selected pixels to the movement models is effected, and the optimization of the error functional is begun anew.

8. Method according to any of the preceding claims, wherein the at least one camera executes a movement with respect to the object (11, 13, 15, 16, 17) which corresponds to the stationary rigid background.

9. Method according to any of the preceding claims, wherein a plurality of image sequences are recorded by means of a camera system comprising a plurality of synchronized cameras, wherein the model parameters comprise the poses of each object (11, 13, 15, 16, 17; 19) in relation to the camera system, wherein pixels can be selected from all cameras, wherein pixels are selected from images from the key cycles of at least one camera, wherein for selected pixels the observations in at least one camera and at least one key cycle are included as energy terms of the photometric error, and wherein a joint optimization of all parameters is performed in order to minimize the resulting error functional.

10. Method according to Claim 9, wherein a multi-camera direct image alignment is performed with one or more image pyramid levels for the tracking of individual objects (11, 13, 15, 16, 17; 19), wherein a joint optimization of all model parameters is performed in order to minimize the resulting error functional, wherein the model parameters comprise the poses of each object (11, 13, 15, 16, 17; 19) in relation to the camera system, wherein for selected pixels the observations in at least one camera of the cycle to be optimized are included as energy terms of the photometric error.

11. Method according to any of Claims 4 to 10, wherein the model parameters comprise further intrinsic photometric, further intrinsic geometric and/or extrinsic camera parameters of the at least one camera so that the joint optimization of all parameters brings about an autocalibration of the at least one camera.

12. Device (2) for the detection, 3D reconstruction and tracking of a plurality of rigid objects (11, 13, 15, 16, 17; 19) moving relative to one another from a sequence of images from at least one camera, said images being received by an input unit, comprising the input unit, a selection unit, an optimization unit, and an output unit, wherein the selection unit is configured

a) to select images at specific recording times (= key cycles) from the sequence of images from the at least one camera;
the optimization unit is configured for
b) jointly optimizing all model parameters of a model for describing the rigid objects (11, 13, 15, 16, 17; 19) moving relative to one another by means of the images from the key cycles on the basis of sparsely selected pixels in the key cycles, wherein the model comprises parameters for describing the number, the 3D structure, the poses of the rigid objects (11, 13, 15, 16, 17; 19) in the key cycles, and an assignment of the selected pixels to the rigid objects (11, 13, 15, 16, 17; 19), by
c) minimizing an error functional, wherein the error functional comprises a photometric error $E_{photo}$ and a first a-priori energy term $E_{comp}$, which is dependent on the number of rigid objects (11, 13, 15, 16, 17; 19), and the output unit is configured for
d) outputting the number, 3D structure and trajectory of the rigid objects (11, 13, 15, 16, 17; 19) detected from the sequence of images.

**Revendications**

1. Procédé de détection, de reconstruction 3D, et de suivi de plusieurs objets rigides (11, 13, 15, 16, 17 ; 19) déplacés les uns par rapport aux autres à partir d'une séquence d'images d'au moins une caméra, ledit procédé comprenant les étapes suivantes :

a) sélectionner des images à partir d'instants d'enregistrement spécifiques (= cycles-clés) à partir de la séquence d'images d'au moins une caméra,
b) optimiser conjointement tous les paramètres d'un modèle destinés à décrire des objets rigides (11, 13, 15, 16, 17 ; 19) à l'aide des images des cycles-clés sur la base de pixels peu sélectionnés dans les cycles-clés, le modèle comprenant des paramètres pour décrire le nombre, la structure 3D, les poses des objets rigides (11, 13, 15, 16, 17 ; 19) dans les cycles-clés, et une association des pixels sélectionnés aux objets rigides (11, 13, 15 ,16, 17 ; 19), par
c) minimisation d'une fonctionnelle d'erreur (S20), la fonctionnelle d'erreur comprenant une erreur photométrique $E_{photo}$, qui dépend d'intensités d'images de plusieurs cycles-clés, et un premier terme d'énergie a priori $E_{comp}$, qui dépend du nombre d'objets rigides (11, 13, 15, 16, 17 ; 19), et
d) délivrer en sortie le nombre, la structure 3D et la trajectoire, détectés à partir de la séquence d'images, des objets rigides (11, 13, 15, 16, 17 ; 19).

2. Procédé selon la revendication 1, la fonctionnelle d'erreur comprenant un deuxième terme d'énergie a priori $E_{geo}$ qui dépend de la structure 3D des objets rigides (11, 13, 15, 16, 17 ; 19).

3. Procédé selon la revendication 1 ou 2, la fonctionnelle d'erreur comprenant les paramètres de modèle suivants :

une profondeur inverse pour chaque pixel sélectionné par modèle de mouvement ;
un certain nombre de modèles de mouvement, chaque objet rigide (11, 13, 15, 16, 17 ; 19) actuellement supposé étant associé à un modèle de mouvement ;
une pose par modèle de mouvement et par cycle-clé actif ; et
la probabilité d'association de chaque pixel sélectionné à chaque modèle de mouvement.

4. Procédé selon la revendication 3, la fonctionnelle d'erreur comprenant en outre les paramètres de modèle suivants :

une courbe caractéristique de capteur pour chaque image et
une distance focale et un point principal pour chaque caméra de sorte que l'optimisation conjointe de tous les paramètres a pour effet un auto-étalonnage de l'au moins une caméra.

**5.** Procédé selon l'une des revendications précédentes, un alignement direct d'image étant effectué avec un ou plusieurs étages de pyramide d'image pour suivre des objets individuels (11, 13, 15, 16, 17 ; 19).

**6.** Procédé selon l'une des revendications précédentes, pour optimiser la fonctionnelle d'erreur, des paramètres de trajectoire et de structure étant alternativement optimisés au moyen d'une compensation de faisceau photométrique utilisant des cycles-clés spécifiques à l'objet (S203) et l'association des pixels à un modèle de mouvement (S205).

**7.** Procédé selon la revendication 6, le nombre de modèles de mouvement étant ensuite optimisé (S207), si un modèle de mouvement est ajouté à la fonctionnelle d'erreur ou si un modèle de mouvement est retiré de la fonctionnelle d'erreur, les pixels sélectionnés étant à nouveau associés aux modèles de mouvement, et l'optimisation de la fonctionnelle d'erreur étant relancée.

**8.** Procédé selon l'une des revendications précédentes, l'au moins une caméra effectuant un mouvement par rapport à l'objet (11, 13, 15, 16, 17) qui correspond à l'arrière-plan fixe et rigide.

**9.** Procédé selon l'une des revendications précédentes, une pluralité de séquences d'images étant enregistrée au moyen d'un système de caméras comprenant plusieurs caméras synchronisées, les paramètres de modèle comprenant les poses de chaque objet (11, 13, 15, 16, 17 ; 19) par rapport au système de caméras, les pixels pouvant être sélectionnés à partir de toutes les caméras, les pixels étant sélectionnés à partir des images des cycles-clés d'au moins une caméra, les observations intervenant, pour des pixels sélectionnés, dans au moins une caméra et au moins un cycle-clé en tant que termes d'énergie de l'erreur photométrique et une optimisation conjointe de tous les paramètres étant effectuée pour minimiser la fonctionnelle d'erreur résultante.

**10.** Procédé selon la revendication 9, un alignement direct d'images multi-caméras étant effectué avec un ou plusieurs étages de pyramide d'images pour le suivi d'objets individuels (11, 13, 15, 16, 17 ; 19), une optimisation conjointe de tous les paramètres de modèle étant effectuée pour minimiser la fonctionnelle d'erreur résultante, les paramètres de modèle incluant les poses de chaque objet (11, 13, 15, 16, 17 ; 19) par rapport au système de caméras, les observations intervenant, pour des pixels sélectionnés, dans au moins une caméra du cycle à optimiser en termes d'énergie d'erreur photométrique.

**11.** Procédé selon l'une des revendications 4 à 10, les paramètres de modèle comprenant d'autres paramètres de caméra photométriques intrinsèques, d'autres paramètres de caméra géométriques intrinsèques et/ou d'autres paramètres de caméra extrinsèques de l'au moins une caméra de sorte que l'optimisation conjointe de tous les paramètres a pour effet un auto-étalonnage de l'au moins une caméra.

**12.** Dispositif (2) de détection, de reconstruction 3D et de suivi de plusieurs objets rigides (11, 13, 15, 16, 17 ; 19) se déplaçant les uns par rapport aux autres à partir d'une séquence d'images, reçues par une unité d'entrée, d'au moins une caméra, ledit dispositif comprenant l'unité d'entrée, une unité de sélection, une unité d'optimisation et une unité de sortie,
l'unité de sélection étant configurée pour

a) sélectionner des images à partir d'instants d'enregistrement déterminés (= cycles-clés) à partir de la séquence d'images provenant de l'au moins une caméra ;
l'unité d'optimisation étant configurée pour
b) optimiser conjointement tous les paramètres de modèle d'un modèle destiné à décrire les objets rigides (11, 13, 15, 16, 17 ; 19) se déplaçant les uns par rapport aux autres à l'aide des images des cycles-clés sur la base de pixels peu sélectionnés dans les cycles-clés, le modèle comprenant des paramètres destinés à décrire le nombre, la structure 3D, les poses des objets rigides (11, 13, 15, 16, 17 ; 19) dans les cycles-clés et une association des pixels sélectionnés aux objets rigides (11, 13, 15, 16, 17 ; 19), par
c) minimisation d'une fonctionnelle d'erreur, la fonctionnelle d'erreur comprenant une erreur photométrique $E_{photo}$ et un premier terme d'énergie a priori $E_{comp}$ qui dépend du nombre d'objets rigides (11, 13, 15, 16, 17 ; 19), et
l'unité de sortie étant configurée pour
d) délivrer en sortie le nombre, la structure 3D et la trajectoire, détectés à partir de la séquence d'images, des objets rigides (11, 13, 15, 16, 17 ; 19).

Fig. 1

Fig. 2

Initialisierung von Parametern eines
Fehlerfunktionals mit einem Bewegungsmodell
(S12)

Erhalten von einem Zyklus, d.h. jeweils einem
Einzelbild von mehreren synchronisierten
Kameras (S14)

Multi-Kamera Direct Image Alignment für jedes
Bewegungsmodell zur Bestimmung von
Positionsparametern im aktuellen Zyklus (S16)

Datenselektion und Minimierung des
Fehlerfunktionals (S20)

Ausgeben der Parameter (S22)

Fig. 3

Selektion der Key-Zyklen für jedes Bewegungsmodell aus der Menge aller Kamera-Zyklen (S200)

Selektion von Punkten in Bildern der Vereinigungsmenge aller Key-Zyklen aller Bewegungsmodelle (S201)

Initialisierung von neuen Parametern des Fehlerfunktionals (S202)

Optimierung der Bewegungs- und Strukturparameter mittels photometrischem Bundle Adjustment anhand Bewegungsmodell-spezifischen Key-Zyklen (S203)

Multi-Kamera Direct Image Alignment für Bewegungsmodell-fremde Key-Zyklen zur Ermittlung der jeweiligen Positionsparameter (S204)

Optimierung der Zugehörigkeit von Bildpunkt zu Bewegungsmodell (S205)

Konvergenz erreicht? (S206) — NEIN (Punkt-Zugehörigkeiten wurden verändert)

JA

Optimierung der Anzahl der Bewegungsmodelle, sowie der Zugehörigkeit von Bildpunkt zu Bewegungsmodell (S207)

Entfernen eines Bewegungsmodells und der zugehörigen Parameter (S210)

Konvergenz erreicht? (S208) — NEIN (Anzahl passt nicht) — Anzahl Bewegungsmodelle? (S209)

ZU HOCH

ZU NIEDRIG

JA

Initialisierung von neuen Parametern des Fehlerfunktionals zur Beschreibung eines weiteren Bewegungsmodells (S211)

Ausgeben der Parameter (S22)

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006013318 A1
- US 2013265387 A1
- EP 3474230 A1

**In der Beschreibung aufgeführte Nicht-Patentliteratur**

- **NEWCOMBE et al.** DTAM: Dense tracking and mapping in real time. *2011 International conference on computer vision,* November 2011, 2920-2927
- **ALISMAIL et al.** Photometric Bundle Adjustment for Vision-Based SLAM. *arXiv: 1608.02026v1,* 05. August 2016
- **ENGEL et al.** *arXiv:1607.02565v2,* 07. Oktober 2016
- **RANFTL et al.** *Dense Monocular Depth Estimation in Complex Dynamic Scenes*
- **J. ENGEL et al.** LSD-SLAM: Large-Scale Direct Monocular SLAM. *ECCV,* September 2014